# EUROPEAN PATENT SPECIFICATION

(11) **EP 2 520 819 B1**
(45) Date of publication and mention of the grant of the patent: **27.02.2019**
(21) Application number: 10840863.4
(22) Date of filing: 10.12.2010
(51) Int. Cl.: F16D 65/56, B61H 15/00, F16D 55/224

(54) **BRAKE CYLINDER DEVICE AND DISK BRAKE DEVICE**
BREMSZYLINDERVORRICHTUNG UND SCHEIBENBREMSENVORRICHTUNG
DISPOSITIF DE CYLINDRE DE FREIN ET DISPOSITIF DE DISQUE DE FREIN

(30) Priority: 28.12.2009 JP 2009297357
(43) Date of publication of application: 07.11.2012
(73) Proprietor: Nabtesco Corporation, Tokyo 102-0093 (JP)
(72) Inventor: OHNO, Tomoya, Kobe-shi Hyogo 651-2271 (JP); OZAWA, Yoichiro, Kobe-shi Hyogo 651-2271 (JP); NAKAMURA, Jyoichi, Kobe-shi Hyogo 651-2271 (JP)
(74) Representative: Isarpatent
(86) International application number: PCT/JP2010/072191
(87) International publication number: WO 2011/081005

(56) References cited:
- EP-A1- 0 174 690
- EP-A2- 0 084 294
- WO-A1-2008/097188
- DE-A1- 2 748 068
- FR-A1- 2 367 222
- JP-A- 52 013 215
- JP-A- 61 070 231
- JP-A- 2007 131 203
- JP-A- 2008 261 439
- US-A- 3 744 596
- US-A- 4 088 205

## Description

### Technical Field

The present invention relates to a brake cylinder device including a clearance adjustment mechanism for automatically adjusting a clearance up to a brake operating position in a brake-released state, and a disk brake device including the brake cylinder device.

### Background Art

An example of a brake cylinder device including a clearance adjustment mechanism is disclosed in the EP 0 084 294 A2.

A further known example of the brake cylinder device including a clearance adjustment mechanism for automatically adjusting a clearance up to a brake operating position (position where braking force can be generated) in a brake-released state is disclosed in Patent Document 1. The brake cylinder device disclosed in Patent Document 1 is provided with a push rod having an uneven surface formed in its exterior and a guide member that is movable together with the push rod. Also, an O-ring for engaging with the uneven surface is disposed in a space between the guide member and the push rod, and a clearance up to a brake operating position in a brake-released state is automatically adjusted by the O-ring climbing over the protrusions of the uneven surface when a force of a predetermined value or greater acts on the guide member. Thus, the clearance adjustment mechanism is configured by the uneven surface and the O-ring engaging therewith, and it is therefore possible, with a simple configuration, to achieve a brake cylinder device including a clearance adjustment mechanism for which sliding resistance can be readily adjusted and managed.

Meanwhile, a known example of a brake cylinder device including a clearance adjustment mechanism that does not use an O-ring unlike the above-described device is disclosed in Patent Document 2. The clearance adjustment mechanism of the brake cylinder device disclosed in Patent Document 2 is provided with a cylindrical sheath rod that is rotatably supported to a piston via a bearing and that includes a linear key groove and a spiral key groove formed in its outer circumference, and a push rod attached to a push rod receiver threadably engaging with the inner circumference of the sheath rod. Further, the teeth of the gear of a ratchet mechanism whose direction of rotation is restricted by engaging with a pawl are configured to be fitted into the key grooves of the sheath rod. Then, when the stroke of the piston is greater than or equal to a predetermined stroke during the breaking operation, the position of engagement between the pawl and the ratchet gear is displaced. Thereby, a clearance up to a brake operating position in the brake-released state is automatically adjusted.

### Citation List

### Patent Document

Patent Document 1: JP 2007-131203A
Patent Document 2: JP 61-59158U

### Disclosure of the Invention

### Problem to be Solved by the Invention

The above-described clearance adjustment mechanism of the brake cylinder device disclosed in Patent Document 1 uses the elastic deformation of the O-ring, and thus is less likely to be affected by the surrounding environment such as temperature and humidity at the time of operation of the clearance adjustment mechanism. For this reason, it is necessary to construct the clearance adjustment mechanism using an O-ring formed of a special material that is less likely to be affected by the surrounding environment such as temperature and humidity, which results in a cost increase. On the other hand, the clearance adjustment mechanism of the brake cylinder device disclosed in Patent Document 2 does not use an O-ring, and therefore requires very little cost to suppress the influence of the surrounding environment such as temperature and humidity. In the case of the clearance adjustment mechanism disclosed in Patent Document 2, however, it is necessary to provide a bearing for rotatably supporting the sheath rod on the rear side, i.e., the piston side, which is opposite to the brake output portion disposed on the front side, i.e., the tip side of the push rod. This results in a limiting factor in reducing the radial dimension on the rear side of the cylinder body in which the piston is disposed.

In view of the foregoing circumstances, it is an object of the present invention to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body. It is also an object of the invention to provide a disk brake device including the brake cylinder device.

### Means for Solving the Problem

A brake cylinder device according to a first aspect of the present invention for achieving the above-described objects is a brake cylinder device including: a cylinder body having a hollow interior; a piston that defines a pressure chamber inside the cylinder body and to which a biasing force generated by a piston spring is transmitted, the piston moving relative to the cylinder body against the biasing force of the piston spring by supply of pressure fluid to the pressure chamber; a brake output portion that is provided so as to be movable together with the piston or provided so as to be movable via a force amplifying mechanism for amplifying a force generated in the piston as a result of movement of the piston, the brake output portion being movable in a braking direction in which it projects from the cylinder body and an anti-braking direction in which it approaches the cylinder body; a threaded shaft that is connected to the brake output portion and has a thread formed on an outer circumference thereof; a guide tube that is attached to the piston or the force amplifying mechanism and accommodates the threaded shaft thereinside; a pusher spring disposed so as to be capable of biasing the threaded shaft toward the braking direction to the guide tube or the piston; a clutch nut for threadably engaging with a tip of the threaded shaft disposed on the brake output portion side with respect to the cylinder body; a front clutch disposed so as to be capable of coming into contact with the clutch nut on a front side, which is the brake output portion side with respect to the clutch nut; a rear clutch disposed so as to be capable of coming into contact with the clutch nut via a predetermined interval from the front clutch on a rear side, which is a side opposite to the brake output portion side with respect to the clutch nut; a stopper that is disposed so as to be movable relative to the clutch nut and the guide tube along the axial direction of the threaded shaft and whose movable range is restricted with respect to the cylinder body; and an adjustment spring that is in contact with or connected to the stopper at a first end thereof and is capable of biasing the clutch nut toward the anti-braking direction.

According to this aspect of the invention, during the braking operation, by supplying the pressure fluid to the pressure chamber, the piston moves against the biasing force of the piston spring, which causes the brake output portion to move in the braking direction via the guide tube, the rear clutch, the clutch nut, and the threaded shaft, and thereby braking force is generated. Note that in the case where the force amplifying mechanism is provided, the force from the piston is transmitted via the force amplifying mechanism. On the other hand, by discharging the pressure fluid from the pressure chamber, the piston moves in the opposite direction by the biasing force of the piston spring, which causes the brake output portion to move in the anti-braking direction via the guide tube, the front clutch, the clutch nut, and the threaded shaft, and thereby the brake is released. In the case where the clearance up to a brake operating position in the brake-released state is increased, for example, as a result of wear of the brake pads, the above-described clearance is automatically adjusted by the clearance adjustment mechanism composed of the clutch nut, the front and rear clutches, the threaded shaft, the guide tube, the pusher spring, the stopper, and the adjustment spring.

In the case where the clearance adjustment is performed, first, during the braking operation, the range of movement of the stopper is restricted, and thereby a force capable of biasing the clutch nut in the anti-braking direction is accumulated in the adjustment spring as the accumulated force of the adjustment spring. Since the threaded shaft is biased in the braking direction by the pusher spring, when the guide tube starts moving in the anti-braking direction during the brake releasing operation, the threaded shaft and the brake output portion do not move in the anti-braking direction, resulting in a state in which the clutch nut is biased in the anti-braking direction by the accumulated force of the adjustment spring. At this time, a state occurs in which the contact of the clutch nut with the rear clutch is released and the clutch nut is neither in contact with the front clutch, and the clutch nut becomes rotatable with respect to the threaded shaft in this state. Then, the clutch nut rotates with respect to the threaded shaft by the accumulated force of the adjustment spring so as to move in the anti-braking direction. Thereafter, the clutch nut and the front clutch come into contact with each other, which makes the clutch nut unrotatable. As a result of the movement of the guide tube in the anti-braking direction, the brake output portion moves in the anti-braking direction together with the front clutch, the clutch nut, and the threaded shaft, and thereby the brake is released. Thus, the clutch nut moves relative to the threaded shaft in the anti-braking direction in the middle of the brake releasing operation, and therefore, the brake releasing operation ends in a state in which the position of the threaded shaft has moved further in the braking direction than in the state before the brake releasing operation. That is, a transition is made to a state in which the threaded shaft and the brake output portion have moved to positions projecting with respect to the cylinder body, as compared to the state before the braking operation. Consequently, the clearance up to the brake operating position in the brake-released state is automatically adjusted.

As described above, according to the present invention, the clearance adjustment mechanism includes the clutch nut, the front and rear clutches, the threaded shaft, the guide tube, the pusher spring, the stopper, and the adjustment spring. Accordingly, the clearance adjustment is not performed using elastic deformation of rubber or the like, and it is therefore possible to achieve a configuration that is less likely to be affected by the surrounding environment such as temperature and humidity at low cost. Also, it is not necessary to provide a bearing in the structure for attaching the guide tube to the piston or the force amplifying mechanism, which makes it possible to reduce the radial dimension of the cylinder body on the rear side.

Therefore, according to the present invention, it is possible to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body.

According to a brake cylinder device of a second aspect of the present invention, in the brake cylinder device of the first aspect, the threaded shaft has a hollow interior formed so as to be open toward a side opposite to the brake output portion, and the pusher spring biases the clutch nut threadably engaged with the threaded shaft toward the front clutch by biasing the threaded shaft from inside.

According to this aspect of the invention, the pusher spring that biases the threaded shaft is disposed inside the threaded shaft having a hollow structure, and is configured to bias the clutch nut threadably engaged with the threaded shaft toward the front clutch. Accordingly, the pusher spring can be disposed by efficiently using the space in the brake cylinder device. This can increase the space efficiency in the brake cylinder device, which makes it possible to realize a further size reduction.

According to a brake cylinder device of a third aspect of the present invention, the brake cylinder device of the second aspect further includes a pusher spring guide that is formed as a shaft-like portion provided so as to be movable together with the guide tube and is inserted inside the pusher spring provided as a coil-shaped spring to restrict deformation of the pusher spring in the buckling direction, wherein the pusher spring guide is disposed such that a tip thereof is slidable on the inside of the threaded shaft.

According to this aspect of the invention, the pusher spring guide is provided that extends inside the coil-shaped pusher spring and restricts the deformation of the pusher spring in the buckling direction. Accordingly, the dimension of the clearance to be adjusted by the clearance adjustment mechanism is increased, and therefore, the buckling of the pusher spring can be efficiently prevented even if a long pusher spring is required. Further, the pusher spring guide provided so as to be movable together with the guide tube is disposed such that its tip is slidable on the inside of the threaded shaft. Accordingly, it is possible, with a simple configuration of providing the shaft-like pusher spring guide, to readily achieve a structure that maintains the positional relationship between the threaded shaft and the piston such that they are displaced coaxially.

According to a brake cylinder device of a fourth aspect of the present invention, in the brake cylinder device of any one of the first to third aspects, the front clutch and the rear clutch are provided as separate unitary members, and are each fixed to the guide tube.

According to this aspect of the invention, the front clutch and the rear clutch are provided as separate unitary members and are separately fixed to the guide tube. Accordingly, it is not necessary to provide each of the front and rear clutches disposed at the front and the rear, respectively, of the clutch nut as a divided structure and perform coupling with additional coupling means. Likewise, it is not necessary to provide the clutch nut at the front and the rear of which the front and rear clutches are disposed as a divided structure and perform coupling with additional coupling means. This can simplify the configuration for the front and rear clutches and the clutch nut, and consequently, the size and the weight of the brake cylinder device as a whole can be reduced. Furthermore, due to the configuration in which the front and rear clutches are separate unitary members and are fixed to the guide tube, it is possible to set the dimensional configuration such that the inner circumferences of the front and rear clutches are located closer to the outer circumference of the threaded shaft, which makes it possible to realize a further size reduction for the brake cylinder device.

According to a brake cylinder device of a fifth aspect of the present invention, in the brake cylinder device of the fourth aspect, at least one of the front clutch and the rear clutch is fixed to an inner circumference of the guide tube by threaded coupling.

According to this aspect of the invention, at least one of the front clutch and the rear clutch provided as separate unitary members is fixed to the inner circumference of the guide tube by threaded coupling. Accordingly, the front clutch and the rear clutch fixed to the guide tube by threaded coupling can be readily replaced at the time of maintenance, which makes it possible to increase the ease of maintenance.

According to a brake cylinder device of a sixth aspect of the present invention, in the brake cylinder device of any one of the first to fifth aspects, further includes an adjustment sleeve that is provided as a tubular member disposed around the threaded shaft and having flexibility, and is biased toward the anti-braking direction by a second end of the adjustment spring whose first end is in contact with or connected to the stopper, wherein the clutch nut and the adjustment sleeve are configured integrally by engagement of an engaging portion formed on the adjustment sleeve with an engaged portion formed on the clutch nut.

According to this aspect of the invention, the adjustment spring is disposed between the tubular adjustment sleeve disposed around the threaded shaft and the stopper, and a force for moving the clutch nut relative to the threaded shaft in the anti-braking direction is accumulated during the clearance adjustment operation along with the relative movement of the adjustment sleeve with respect to the stopper. Also, the adjustment sleeve is provided as a member having flexibility, and the adjustment sleeve and the clutch nut are integrated by engagement of the engaging portion on the adjustment sleeve side and the engaged portion on the clutch nut side. Accordingly, the engaging portion can be engaged with the engaged portion by temporarily causing the adjustment sleeve having flexibility to be elastically deformed, and therefore, the adjustment sleeve and the clutch nut can be integrated without using any additional fastening member. Thus, the structure for integrating the adjustment sleeve and the clutch nut does not require any additional fastening member, and it is therefore possible to achieve a further size reduction for the brake cylinder device.

According to a brake cylinder device of a seventh aspect of the present invention, in the brake cylinder device of the sixth aspect, the engaging portion of the adjustment sleeve engages from inside with the engaged portion formed on an inner circumference of the clutch nut, and a clearance formed between an inner circumference of the adjustment sleeve and the top of the ridge of the thread of the threaded shaft has a smaller dimension in the radial direction of the adjustment sleeve than a dimension, in the radial direction of the adjustment sleeve, of indented portions of the engaging portion and the engaged portion that are fitted together.

According to this aspect of the invention, the adjustment sleeve is configured to engage from inside of the clutch nut, and the dimension of the clearance between the inner circumference of the adjustment sleeve and the top of the ridge of the thread of the threaded shaft is set to be smaller than the radial dimension of the indented portions of the engaging portion and the engaged portion that are fitted together (the length, in the radial direction of the adjustment sleeve, of overlap of the indented portions). Accordingly, the engaging portion of the adjustment sleeve having flexibility is disposed between the clutch nut and the threaded shaft that are formed of a metallic material, and, moreover, a dimensional relationship that can prevent disengagement of the engaging portion of the adjustment sleeve from the engaged portion caused by deformation toward the threaded shaft. This makes it possible to firmly integrate the adjustment sleeve and the clutch nut even though the engagement configuration is simple.

According to a brake cylinder device of an eighth aspect of the present invention, in the brake cylinder device of the seventh aspect, the adjustment spring is disposed so as to bias, at a second end thereof, a spring receiver attached to the adjustment sleeve, and the spring receiver is disposed such that a clearance formed between the outer circumference of the spring receiver and the inner circumference of the guide tube has a dimension in the radial direction of the guide tube that is substantially zero, or is disposed such that the outer circumference of the spring receiver and the inner circumference of the guide tube are in sliding contact.

According to this aspect of the invention, the spring receiver is disposed such that the clearance to the guide tube is substantially zero or is disposed so as to be in sliding contact with the guide tube, and therefore, the threaded shaft can be supported to the guide tube via the spring receiver, which makes it possible to prevent the threaded shaft from being tilted with respect to the guide tube.

According to a brake cylinder device of a ninth aspect of the present invention, in the brake cylinder device of the eighth aspect, the spring receiver includes a bearing.

According to this aspect of the invention, the second end of the adjustment spring biases the adjustment sleeve via the bearing of the spring receiver, and therefore, when the adjustment sleeve is biased by the accumulated force of the adjustment spring, the clutch nut smoothly rotates together with the adjustment sleeve and moves in the braking direction.

According to a brake cylinder device of a tenth aspect of the present invention, the brake cylinder device of any one of the first to ninth aspects further includes a spring stopper that restricts, to a predetermined amount or less, the amount of displacement of the adjustment spring due to elastic deformation caused by relative displacement of a second end of the adjustment spring with respect to a first end thereof that is in contact with or connected to the stopper.

According to this aspect of the invention, the spring stopper is provided that restricts, to a predetermined amount or less, the amount of displacement of the adjustment spring during the elastic deformation of the adjustment spring such that the force for the clearance adjustment operation is accumulated. Accordingly, even if the clearance adjustment operation is forcibly performed in an operation that does not generate braking force (in the case of applying the brake cylinder device to a disk brake, an operation that does not cause the brake pads to come into contact with the disk: Note that the clearance adjustment is performed using the force generated by the brake pads coming into contact with the disk, and the clearance adjustment cannot be performed without such contact), or in other words, an operation in the so-called idling state, the stroke of the adjustment spring is restricted by the spring stopper. Accordingly, the adjustment spring will not be excessively compressed or extended, and the clearance adjustment operation can be performed forcibly even in the idling state. Note that the clearance is increased to exceed the range where clearance adjustment is possible in order to facilitate the replacement of the brake pads, and therefore, it has been hitherto necessary to manually perform the clearance adjustment one by one when the replacement of the brake pads has been performed. However, according to the present invention, as described above, the adjustment spring will not be excessively compressed or extended, and the clearance adjustment operation can be performed forcibly even in the idling state. Accordingly, by repeating operations corresponding to the braking operation and the brake releasing operation multiple times for the entire vehicle or the entire group of vehicles at once, the clearance is automatically adjusted in all brake cylinder devices. Thereby, when the brake pads have been replaced, it is possible to automatically perform the clearance adjustment on all brake cylinder devices in a vehicle or a group of vehicles at once, without the need to manually perform the clearance adjustment on brake cylinder devices one by one. Accordingly, it is possible to significantly reduce the number of steps and time and effort in the operation associated with the replacement of brake pads, which makes it possible to considerably promote the efficiency.

According to a brake cylinder device of an eleventh aspect of the present invention, in the brake cylinder device according to any one of the first to tenth aspects, teeth capable of engaging the front clutch with the clutch nut are formed on at least one of a surface of the front clutch that faces the clutch nut and a surface of the clutch nut that faces the front clutch.

According to this aspect of the invention, in a state in which the front clutch and the clutch nut are in contact with each other and the brake is not operated, the front clutch and the clutch nut engage with each other via the teeth formed on the mutually facing surfaces, and it is therefore possible to prevent the clutch nut from rotating due to vibrations or the like. Also, even in a state in which the biasing force of the pusher spring has been reduced due to an increase in the amount of clearance adjustment as the clearance adjustment operation is repeatedly performed (when the pusher spring is a compression spring, a state in which the spring is extended), it is possible to prevent the clutch nut from rotating due to vibrations or the like when the brake is not operated.

According to a brake cylinder device of a twelfth aspect of the present invention, in the brake cylinder device of any one of the first to eleventh aspects, the threaded shaft is provided, at a tip thereof, with an operation engaging portion capable of engaging with an operation tool, and is disposed such that the tip passes through the brake output portion and faces outward, and a nut member is further provided for threadably engaging with an outer circumference of the tip of the threaded shaft and engaging the threaded shaft with the brake output portion.

According to this aspect of the invention, the nut member threadably engages with the tip of the threaded shaft disposed so as to pass through the brake output portion and face outward and on which the operation engaging portion is provided, and thereby the threaded shaft and the brake output portion are engaged with each other. Accordingly, by loosening the nut member to release the engagement of the threaded shaft with the brake output portion and also rotating the threaded shaft with an operation tool, the threaded shaft can be rotated manually, and the positional relationship between the threaded shaft and the clutch nut can be readily brought back into the initial state, which is the state before the clearance adjustment is performed.

According to another aspect of the present invention, it is possible to configure a disk brake device according to the invention including any one of the above-described brake cylinder devices. That is, according to a disk brake device of a thirteenth aspect of the present invention includes the brake cylinder device of any one of the first to twelfth aspects; and a caliper body that is equipped with the brake cylinder device and is attached to so as to be displaceable relative to a vehicle in the direction of an axle, wherein operation of the brake cylinder device causes a disk on the axle side to be sandwiched by a pair of brake pads attached to the caliper body, thereby generating braking force.

According to this aspect of the invention, it is possible to provide a disk brake device including a brake cylinder device provided with a clearance adjustment mechanism for automatically adjusting a clearance up to a brake operating position in a brake-released state at low cost, wherein the disk brake device is less likely to be affected by the surrounding environment such as temperature and humidity and can also achieve a reduction in the radial dimension of the cylinder body.

### Effects of the Invention

According to the present invention, it is possible to provide a brake cylinder device including a clearance adjustment mechanism for automatically adjusting a clearance up to a brake operating position in a brake-released state at low cost, wherein the brake cylinder device is less likely to be affected by the surrounding environment such as temperature and humidity and can also achieve a reduction in the radial dimension of the cylinder body. It is also possible to provide a disk brake device including the brake cylinder device.

### Brief Description of the Drawings

FIG. 1 is a side view of a disk brake device according to an embodiment of the present invention.
FIG. 2 is a plan view of the disk brake device shown in FIG. 1.
FIG. 3 is a cross-sectional view of a brake cylinder device according to a first embodiment of the present invention.
FIG. 4 is a diagram showing the tips of a brake output portion, a nut member, and a threaded shaft of the brake cylinder device shown in FIG. 3, as viewed in the direction indicated by the arrow C.
FIG. 5 is an enlarged cross-sectional view showing a part of the brake cylinder device shown in FIG. 3 in enlargement.
FIG. 6 is a cross-sectional view of the brake cylinder device shown in FIG. 3 for illustrating a case where the brake cylinder device is operated without performing automatic clearance adjustment by a clearance adjustment mechanism.
FIG. 7 is a cross-sectional view of the brake cylinder device shown in FIG. 3 for illustrating a case where the brake cylinder device is operated without performing automatic clearance adjustment by a clearance adjustment mechanism.
FIG. 8 is a cross-sectional view of the brake cylinder device shown in FIG. 3 for illustrating a case where the brake cylinder device is operated without performing automatic clearance adjustment by a clearance adjustment mechanism.
FIG. 9 is a cross-sectional view of the brake cylinder device shown in FIG. 3 for illustrating an operation in the case where automatic clearance adjustment by a clearance adjustment mechanism is performed.
FIG. 10 is a cross-sectional view of the brake cylinder device shown in FIG. 3 for illustrating an operation in the case where automatic clearance adjustment by a clearance adjustment mechanism is performed.
FIG. 11 is a cross-sectional view of the brake cylinder device shown in FIG. 3 for illustrating an operation in the case where automatic clearance adjustment by a clearance adjustment mechanism is performed.
FIG. 12 is a cross-sectional view of the brake cylinder device shown in FIG. 3 for illustrating an operation in the case where automatic clearance adjustment by a clearance adjustment mechanism is performed.
FIG. 13 is a cross-sectional view of the brake cylinder device shown in FIG. 3 for illustrating an operation in the case where automatic clearance adjustment by a clearance adjustment mechanism is performed.
FIG. 14 is a cross-sectional view of the brake cylinder device shown in FIG. 3 for illustrating an operation in the case where automatic clearance adjustment by a clearance adjustment mechanism is performed.
FIG. 15 is a cross-sectional view of the brake cylinder device shown in FIG. 3 for illustrating an operation in the case where automatic clearance adjustment by a clearance adjustment mechanism is performed.
FIG. 16 is a cross-sectional view of the brake cylinder device shown in FIG. 3 for illustrating an operation in the case where automatic clearance adjustment by a clearance adjustment mechanism is performed.
FIG. 17 is a cross-sectional view of the brake cylinder device shown in FIG. 3 for illustrating an operation in a case where a clearance adjustment operation is performed in an idling state.
FIG. 18 is a cross-sectional view of the brake cylinder device shown in FIG. 3 for illustrating an operation in the case where a clearance adjustment operation is performed in an idling state.
FIG. 19 is a cross-sectional view of the brake cylinder device shown in FIG. 3 for illustrating an operation in the case where a clearance adjustment operation is performed in an idling state.
FIG. 20 is a cross-sectional view of the brake cylinder device shown in FIG. 3 for illustrating an operation in the case where a clearance adjustment operation is performed in an idling state.
FIG. 21 is a cross-sectional view of a brake cylinder device according to a second embodiment of the present invention.

### Description of Embodiments

Hereinafter, embodiments of the present invention will be described with reference to the drawings. Note that a description will now be given of a brake cylinder device according to the present invention and a disk brake device including the brake cylinder device, taking as an example, a case where they are used for a railroad vehicle. Further, the accuracy of the attached drawings approximates to that of engineering drawings.

### (First Embodiment)

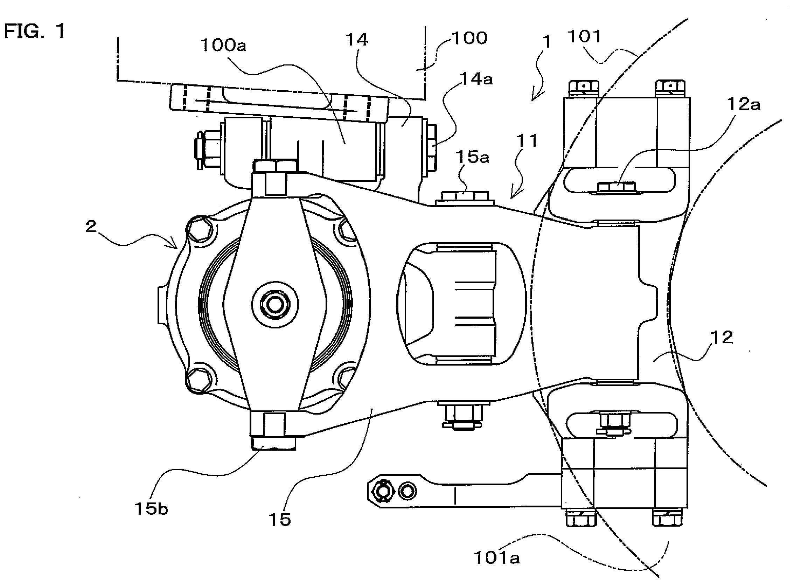

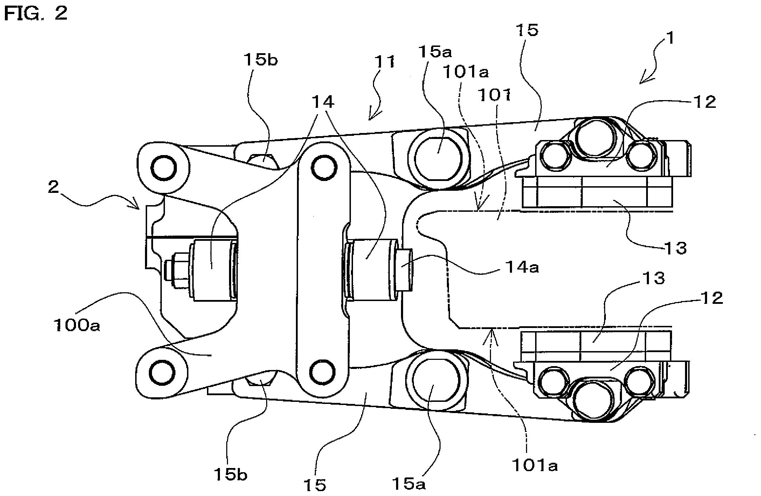

FIG. 1 is a side view of a disk brake device 1 according to an embodiment of the present invention, as viewed in the axle direction. FIG. 2 is a plan view of the disk brake device 1 shown in FIG. 1, as viewed from above. The disk brake device 1 shown in FIGS. 1 and 2 includes a brake cylinder device 2, a caliper body 11 equipped with the brake cylinder device 2 and attached so as to be displaceable relative to a vehicle body 100 in the axle direction, a pair of back plates (12, 12) serving as brake shoe holding portions for respectively holding a pair of brake pads (13, 13) serving as brake shoes, and so forth.

The pair of brake pads (13, 13) are attached to the caliper body 11 via the back plates 12. Also, the disk brake device 1 is configured such that operation of the brake cylinder device 2 causes the pair of brake pads (13, 13) to sandwich a disk-like brake disk 101 serving as a disk on the axle side that rotates in response to the rotation of a wheel (not shown) of a railroad vehicle, thus generating a braking force. Note that the brake disk 101 is formed in the shape of a disk having braking surfaces (101a, 101a) on both sides that are formed so as to be orthogonal to the rotational axis. Then, operation of the brake cylinder device 2 causes the brake pads (13, 13) to be pressed against the braking surfaces (101a, 101a) so as to sandwich the brake disk 101 from opposite sides from a direction substantially parallel to the direction of the rotational axis of the brake disk 101.

The caliper body 11 includes a coupling member 14 and a pair of brake levers (15, 15). The coupling member 14 is attached via a swing pin 14a to a bracket 100a fixed to the bottom face of the vehicle body 100 such that the coupling member 14 is swingable about an axis parallel to the traveling direction of the vehicle. Also, the pair of brake levers (15, 15) are provided substantially symmetrical with respect to the coupling member 14 so as to be swingable via a pair of fulcrum pins 15a. The fulcrum pins 15a are provided so as to extend in a direction perpendicular to the axial direction of the swing pin 14a, as viewed from the direction of the rotational axis of the brake disk 101.

The pair of brake levers (15, 15) are configured such that the brake cylinder device 2 is attached thereto at one end via a cylinder support pin 15b and the end is driven by the brake cylinder device 2. Also, the pair of back plates (12, 12) for holding the brake pads 13 are attached to the pair of brake levers (15, 15) via the fulcrum pins 15a at the other end, with respect to the end to which the brake cylinder device 2 is attached. The back plates 12 are swingably attached to the brake levers 15 via support pins 12a extending parallel to the fulcrum pins 15a.

In the above-described disk brake device 1, as will be described below, the cylinder body 20 of the brake cylinder device 2 is attached to one of the brake levers 15, whereas the brake output portion 21 is attached to the other brake lever 15, and an operation of causing the brake output portion 21 to project or move in close to the cylinder body 20 is performed by operation of the brake cylinder device 2. Thereby, the disk brake device 1 is driven such that portions of the pair of brake levers (15, 15) that are in the vicinity of the cylinder support pins 15b project from or approach each other.

By being driven in the above-described manner, the disk brake device 1 operates such that the pair of brake levers (15, 15) operate with the fulcrum pins 15a serving as the fulcrums and the brake disk 101 is sandwiched by the brake pads 13. Also, at this time, in the pair of brake levers (15, 15), one of the brake pads 13 that is provided at one of the brake levers 15 first comes into contact with a braking surface 101a of the brake disk 101. Furthermore, the other brake lever 15 presses the other brake pad 13 against a braking surface 101a of the brake disk 101, using a reaction force applied from the brake pad 13 that has come into contact with the braking surface 101a. Thereby, the brake disk 101 is sandwiched by the pair of brake pads (13, 13), and the frictional force generating between the brake pads (13, 13) and the braking surfaces (101a, 101a) brakes the rotation of the brake disk 101, thus braking the rotation of the wheel of the railroad vehicle that is provided coaxially with the brake disk 101.

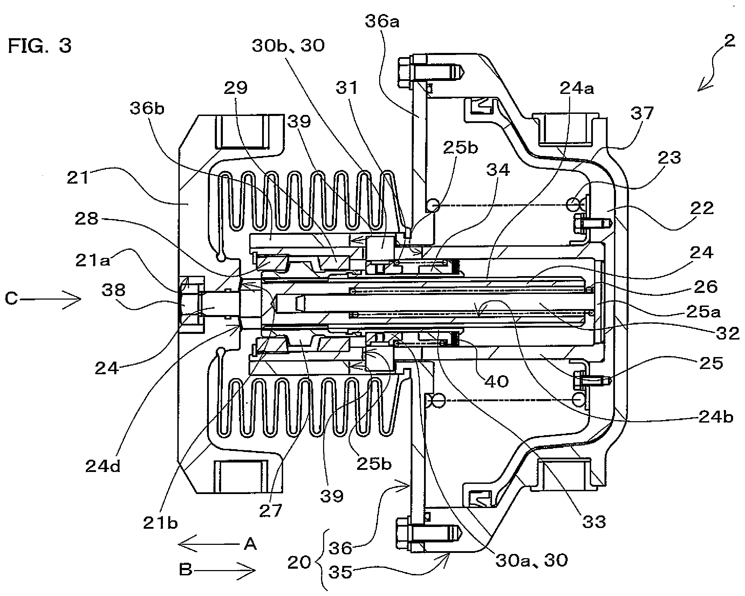

Next, a brake cylinder device 2 according to a first embodiment of the present invention will be described in detail. FIG. 3 is a cross-sectional view of the brake cylinder device 2. Although the brake cylinder device 2 shown in FIG. 3 is configured in the same manner as in the brake cylinder device 2 shown in FIGS. 1 and 2, the outer shape is partly modified. Opposite ends of the brake cylinder device 2 in the brake operating direction are respectively connected to the cylinder support pins 15b. Also, the brake cylinder device 2 includes a cylinder body 20, a brake output portion 21, a piston 22, a piston spring 23, a threaded shaft 24, a guide tube 25, a pusher spring 26, a clutch nut 27, a front clutch 28, a rear clutch 29, a stopper 30, an adjustment spring 31, a pusher spring guide 32, an adjustment sleeve 33, a spring stopper 34, a nut member 38, a bearing 40, and so forth. Of the above-described components, those other than the adjustment sleeve 33 are formed of, for example, a metallic material such as an iron-based material, and the adjustment sleeve 33 is formed of, for example, a resin material. Note that FIG. 3 shows the outer shape, rather than the cross section, of a part of the threaded shaft 24, a part of the stopper 30, the nut member 38, and so forth.

The cylinder body 20 is composed of a first casing portion 35 and a second casing portion 36, and has a hollow interior. Accommodated inside the cylinder body 20 are the piston 22, the piston spring 23, a part of the threaded shaft 24, the guide tube 25, the pusher spring 26, the clutch nut 27, the front clutch 28, the rear clutch 29, the stopper 30, the adjustment spring 31, the pusher spring guide 32, the adjustment sleeve 33, the spring stopper 34, and so forth. The first casing portion 35 is substantially cup-shaped having a bottom, and the second casing portion 36 is fixed with a bolt so as to close the opening side of the first casing portion 35. Note that ends of the first casing portion 35 are connected to one of the brake levers 15 with the cylinder support pins 15b. The second casing portion 36 is provided with a planar portion 36a formed in the shape of a flange so as to close the first casing portion 35 and a tubular portion 36b formed in the shape of a tube projecting perpendicularly to the planar portion 36a.

The piston 22 is disposed so as to partition the interior of the cylinder body 20, and is provided so as to come into sliding contact with the inner circumferential face of the first casing portion 35 in an air-tight manner, and to be axially slidable with respect to the first casing portion 35. The space defined by the piston 22 and the first casing portion 35 forms a pressure chamber 37 inside the cylinder body 20. Compressed air serving as pressure fluid is supplied to and discharged from the pressure chamber 37 via communication passages (not shown).

The piston spring 23 is provided as a coil-shaped spring disposed inside the cylinder body 20 on the side opposite to the pressure chamber 37 via the piston 22, and is disposed between the piston 22 and the planar portion 36a of the second casing portion 36. Also, the piston spring 23 is disposed inside the cylinder body 20 so as to bias the piston 22 toward the pressure chamber 37 side. Then, by supplying compressed air to the pressure chamber 37, the piston 22 moves relative to the cylinder body 20 against the biasing force of the piston spring 23 and thus moves in a braking direction (the direction indicated by the arrow A in FIG. 3). On the other hand, by discharging compressed air from the pressure chamber 37, the piston 22 moves by the biasing force of the piston spring 23 in an anti-braking direction (the direction indicated by the arrow B in FIG. 3), which is the direction opposite to the braking direction.

The brake output portion 21 is connected to the piston 22 via the threaded shaft 24, the guide tube 25, and so forth, which will be described below, and is provided so as to be movable together with the piston 22. Thereby, the brake output portion 21 is provided so as to be movable in the braking direction (the direction of the arrow A) in which it projects from the cylinder body 20 and the anti-braking direction (the direction of the arrow B) in which it approaches the cylinder body 20. Also, the brake output portion 21 is connected to the other brake lever 15 with the cylinder support pins 15b. Note that a bellows structure disposed so as to cover the circumference of the tubular portion 36b of the second casing portion 36 is provided as a protective cover between the brake output portion 21 and the cylinder body 20.

The threaded shaft 24 is provided as a shaft-like member connected to the brake output portion 21 and having a thread 24a formed on the outer circumference thereof. Also, the threaded shaft 24 has a hollow interior formed so as to be open toward the side opposite to the brake output portion 21 (in this embodiment, the piston 22 side). That is, the interior hollow region of the threaded shaft 24 is provided as an axial bore 24b extending axially and is open only on the side opposite to the brake output portion 21.

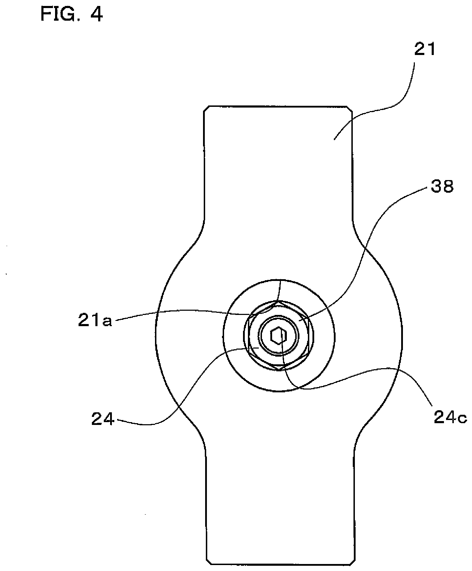

FIG. 4 is a diagram showing the tips of the brake output portion 21, the nut member 38, and the threaded shaft 24, as viewed in the direction indicated by the arrow C in FIG. 3. As shown in FIG. 4, the threaded shaft 24 is provided, at its tip, a hexagon socket 24c serving as an operation engaging portion capable of engaging with an operation tool (for example, a hexagonal wrench). Also, a through hole is formed in the center portion of the brake output portion 21, and the tip of the threaded shaft 24 is disposed so as to pass through the through hole of the brake output portion 21 and face outward. The nut member 38 is provided as a member for threadably engaging with an externally threaded portion formed on the outer circumference of the tip of the threaded shaft 24. Note that the tip of the threaded shaft 24 and the nut member 38 are disposed in a recess 21a formed so as to be open on the end face of the brake output portion 21.

Further, engaging teeth 21b are provided at the edge portion of the opening of the through hole of the brake output portion 21 on the cylinder body 20 side. Meanwhile, engaging teeth 24d are provided at a stepped portion of the threaded shaft 24 that is provided in the form of a step facing the brake output portion 21 and having an expanded diameter. The engaging teeth 21b on the brake output portion 21 side and the engaging teeth 24d on the threaded shaft 24 side are disposed facing each other and are configured to engage with each other. Then, the engaging teeth 24d and the engaging teeth 21b engage each other by the nut member 38 threadably engaging with the outer circumference of the tip of the threaded shaft 24 disposed so as to pass through the through hole of the brake output portion 21, and thereby the threaded shaft 24 and the brake output portion 21 engage each other. Note that the stepped portion of the threaded shaft 24 at which the engaging teeth 24d are provided is provided, for example, as a nut-shaped member that is inserted into and threadably engaged with the main body portion of the threaded shaft 24 from the end in the braking direction.

The guide tube 25 is formed as a cylindrical member, and is disposed such that one end thereof is fixed and attached to the piston 22 and passes thorough the tubular portion 36b of the second casing portion 36 of the cylinder body 20. A base plate 25a is attached to the end of the guide tube 25 that is fixed to the piston 22, and the end facing the brake output portion 21 is provided so as to be open. Also, the threaded shaft 24 is accommodated in the interior space region of the guide tube 25.

Further, the surrounding wall of the guide tube 25 is provided, at a middle position in the direction of the cylinder axis, a pair of slit apertures (25b, 25b) that are formed therethrough in the form of slits. The pair of slit apertures (25b, 25b) are provided so as to be disposed at positions along the diameter direction of the cylindrical guide tube 25, and are formed as openings through which the stopper 30, which will be described below, passes from the inside toward the outside.

The pusher spring 26 is provided as a coil-shaped spring, and is disposed in the axial bore 24b of the threaded shaft 24. Note that the axial bore 24b is provided with a stepped portion whose diameter is reduced stepwise toward the inner side. Also, the pusher spring 26 is provided as a compression spring, and is disposed such that one end is in contact with the stepped portion of the axial bore 24b and the other end is in contact with the base plate 25a of the guide tube 25. Thereby, the pusher spring 26 is disposed so as to be capable of biasing the threaded shaft 24 to the guide tube 25 from inside toward the braking direction.

The pusher spring guide 32 is formed as a shaft-like portion that is fixed to the base plate 25a of the guide tube 25 and is provided so as to be movable together with the guide tube 25. Also, the pusher spring guide 32 is disposed so as to project toward the axial bore 24b of the threaded shaft 24, and is inserted inside the pusher spring 26. Thereby, the pusher spring guide 32 is configured to restrict the deformation of the pusher spring 26 in the buckling direction. Further, the pusher spring guide 32 is inserted in a state in which the tip is in sliding contact with the inner bore portion with a reduced diameter of the axial bore 24b of the threaded shaft 24. Thereby, the pusher spring guide 32 is disposed such that the tip is slidable on the inside of the threaded shaft 24.

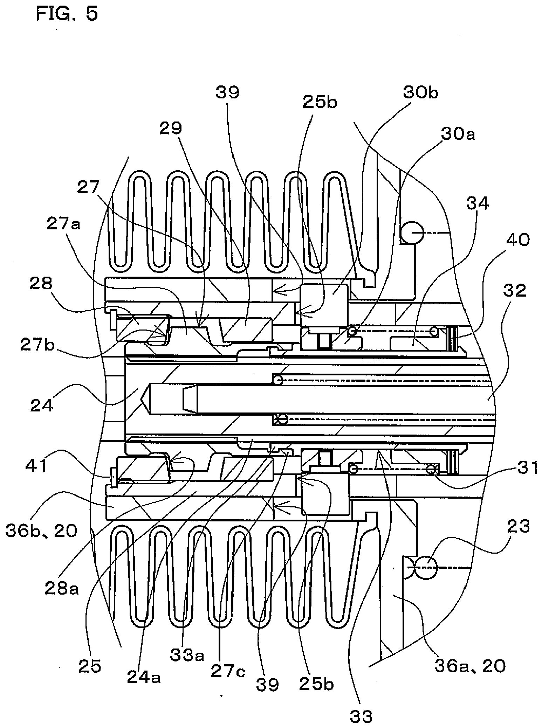

FIG. 5 is an enlarged cross-sectional view showing a part of the brake cylinder device 2 shown in FIG. 3 in enlargement. As shown in FIGS. 3 and 5, the clutch nut 27 is provided as a tubular member having an internally threaded portion formed on its inner circumference, and is configured so as to threadably engage with the tip of the threaded shaft 24 disposed on the brake output portion 21 side with respect to the cylinder body 20. Further, on the outer circumference of the clutch nut 27 at an axially middle position, a protrusion 27a is provided that is formed so as to extend across the circumferential direction and project radially outward and that is capable of coming into contact with the front clutch 28 and the rear clutch 29, which will be described below. Note that due to the provision of the clutch nut 27 as described above, the pusher spring 26 is configured to bias the threaded shaft 24 from inside, thereby biasing the clutch nut 27 threadably engaged with the threaded shaft 24 toward the front clutch 28.

The front clutch 28 is provided as a cylindrical member having an externally threaded portion formed on its outer circumference and having a short axial length, and is formed as a unitary member. Also, the front clutch 28 is threadably engaged, at its externally threaded portion, with an internally threaded portion formed on the inner circumference of the tip of the guide tube 25 that faces the brake output portion 21. That is, the front clutch 28 is fixed to the inner circumference of the guide tube 25 by threaded coupling. Note that a circumferentially extending groove is formed on the inner circumference of the tip of the guide tube 25 on the brake output portion 21 side with respect to the front clutch 28. Then, a snap ring 41 for engaging with the end of the front clutch 28 on the brake output portion 21 side is fitted into the groove, thereby preventing withdrawal of the front clutch 28.

Further, the front clutch 28 is disposed outside and concentrically with respect to the end of the clutch nut 27 on the brake output portion 21 side and the threaded shaft 24 (such that the radial center positions coincide). Also, the front clutch 28 is disposed so as to be capable of coming into contact with the protrusion 27a on the front side, which is the brake output portion 21 side with respect to the clutch nut 27. Further, teeth 28a are formed, across the circumferential direction, on the surface of the front clutch 28 that faces the clutch nut 27. Meanwhile, teeth 27b are formed, across the circumferential direction, on the surface of the protrusion 27a of the clutch nut 27 that faces the front clutch 28. Also, the teeth 28a on the front clutch 28 side and the teeth 27a on the clutch nut 27 side are formed as teeth capable of engaging the front clutch 28 with the clutch nut 27.

The rear clutch 29 is provided as a cylindrical member having a short axial length, and is formed as a unitary member separate from the front clutch 28. Also, the rear clutch 29 is press-fitted inside the guide tube 25 and fixed to the guide tube 25. Note that an end of the rear clutch 29 is in contact and aligned with a step-shaped portion formed on the inner circumference of the guide tube 25.

Further, the rear clutch 29 is disposed outside and concentrically with respect to the end of the clutch nut 27 on the piston 22 side and the threaded shaft 24 (such that the radial center positions coincide). Also, the rear clutch 29 is disposed so as to be capable of coming into contact with the protrusion 27a with a predetermined interval from the front clutch 28 on the rear side, which is the side opposite to the brake output portion 21 side with respect to the clutch nut 27.

Further, the surface of the rear clutch 29 that faces the clutch nut 27 is provided as a tapered surface that is formed obliquely with respect to the axial direction so as to form a part of a conic section, with the axial direction of the threaded shaft 24 as the center line. The surface of the protrusion 27a of the clutch nut 27 that faces the rear clutch 29 is also provided as a tapered surface that is formed obliquely with respect to the axial direction so as to form a part of a conic section, with the axial direction of the threaded shaft 24 as the center line. Also, the above-described surfaces of the rear clutch 29 and the clutch nut 27 that face each other are formed as surfaces that are inclined at substantially the same angle with respect to the axial direction of the threaded shaft 24 and that come into contact with each other.

The stopper 30 includes a ring-shaped ring portion 30a and a pair of projecting portions (30b, 30b) provided in the form of blocks fixed to the ring portion 30a and projecting radially outward from the ring portion 30a. The ring portion 30a is disposed around the threaded shaft 24 and the adjustment sleeve 33, which will be described below, and inside the guide tube 25. Also, the ring portion 30a is in contact with the adjustment sleeve 33 at its end in the braking direction, and is in contact with the adjustment spring 31, which will be described below, at its end in the anti-braking direction.

The pair of projecting portions (30b, 30b) of the stopper 30 are provided so as to be disposed at positions along the diameter direction of the ring portion 30a, and are disposed projecting so as to pass through the pair of slit apertures (25b, 25b) of the guide tube 25. Note that the tubular portion 36b of the second casing portion 36 of the cylinder body 20 is provided, at positions along the diameter direction of the tubular portion 36b, with a pair of stopper stroke restricting portions (39, 39) that are provided as apertures formed therethrough in the form of slits extending parallel to the axial direction of the threaded shaft 24. Also, the projecting ends of the projecting portions 30b are disposed so as to be movable along the stopper stroke restricting portions 39, and also disposed so as to be capable of coming into contact with the ends of the stopper stroke restricting portions 39 in the braking direction and the ends thereof in the anti-braking direction.

By being provided in the above-described manner, the stopper 30 is configured such that it is movable relative to the clutch nut 27 and the guide tube 25 along the axial direction of the threaded shaft 24 and that its movable range is restricted with respect to the cylinder body 20.

The adjustment sleeve 33 is provided as a tubular member formed of resin and thus having flexibility, and is disposed around the threaded shaft 24. Also, the adjustment sleeve 33 is provided, on the outer circumference of its end in the braking direction, with an engaging portion 33a formed as an indented portion. Then, the clutch nut 27 is provided, on the inner circumference of its end in the anti-braking direction, with an engaged portion 27c formed as an indented portion that interfits with the indented portion of the engaging portion 33a. The adjustment sleeve 33 and the clutch nut 27 are configured integrally by engagement of the engaging portion 33a on the adjustment sleeve 33 side with the engaged portion 27c on the clutch nut 27 side.

Note that the engaging portion 33a of the adjustment sleeve 33 is provided so as to engage with the engaged portion 27c formed on the inner circumference of the clutch nut 27. Also, the clearance formed between the inner circumference of the adjustment sleeve 33 and the top of the ridge of the thread 24a of the threaded shaft 24 is configured to have a smaller dimension in the radial direction of the adjustment sleeve 33 than a dimension, in the radial direction of the adjustment sleeve 33, of the indented portions of the engaging portion 33a and the engaged portion 27c that are fitted together (the length of overlap of the indented portion in the radial direction of the adjustment sleeve 33).

The adjustment spring 31 is provided as a coil-shaped spring disposed around the adjustment sleeve 33. Also, the adjustment spring 31 is disposed so as to be in contact with (or to be connected to), at a first end, the end of the ring portion 30a of the stopper 30 in the anti-braking direction, and to bias, at a second end, the spring stopper 34 and the bearing 40 that function as a spring receiver disposed at the end of the adjustment sleeve 33 in the anti-braking direction. Thereby, the adjustment sleeve 33 is configured to be biased in the anti-braking direction by the second end of the adjustment spring 31 whose first end is in contact with the stopper 30. Also, the adjustment spring 31 is configured to be capable of biasing, in the anti-braking direction, the clutch nut 27 engaged and thus integrated with the adjustment sleeve 33.

The bearing 40 described above is disposed between the outer circumference of the adjustment sleeve 33 and the inner circumference of the guide tube 25, and engages with a flange-shaped projection formed around the outer circumference of the end of the adjustment sleeve 33 across the anti-braking direction, thereby being attached to the adjustment sleeve 33. Also, the bearing 40 is disposed such that the clearance formed between the outer circumference of the bearing 40 and the inner circumference of the guide tube 25 has a dimension in the radial direction of the guide tube 25 that is substantially zero. Note that the bearing 40 may be disposed such that the outer circumference of the bearing 40 and the inner circumference of the guide tube 25 are in sliding contact.

The spring stopper 34 is provided as a tubular member disposed around the end of the adjustment sleeve 33 in the anti-braking direction. Also, a flange-shaped portion is formed at the end of the spring stopper 34 in the anti-braking direction, and the spring stopper 34 is in contact with the bearing 40 at the end face of this flange-shaped portion in the anti-braking direction. Further, the spring stopper 34 is in contact with the other end of the adjustment spring 31 (the end in the anti-braking direction) at the end face of the above-described flange-shaped portion in the braking direction. Note that the bearing 40 is disposed between the spring stopper 34 and the adjustment sleeve 33, and therefore the adjustment sleeve 33 is configured to be rotatable with respect to the spring stopper 34.

The end of the tubular portion of the spring stopper 34 in the braking direction faces the end of the ring portion 30a of the stopper 30 in the anti-braking direction via a gap. Also, the end of the tubular portion of the spring stopper 34 in the braking direction is disposed so as to come into contact with the end of the ring portion 30a in the anti-braking direction when the adjustment spring 31 is significantly compressed. Thereby, the spring stopper 34 is configured to restrict, to a predetermined amount or less, the amount of displacement of the adjustment spring 31 due to the elastic deformation caused by the second end of the adjustment spring 31 being relatively displaced with respect to the first thereof in contact with the stopper 30.

Note that even if the biasing force of the adjustment spring 31 becomes large as a result of accumulation of the force, the frictional force resulting from this biasing force will not impede the rotation of the clutch nut 27 engaged and integrated with the adjustment sleeve 33 because the above-described components of the spring receiver includes the bearing 40, in contrast to a configuration in which grease is simply applied to a disk-like member without the use of a bearing. That is, due to the provision of the bearing 40, this biasing force hardly affects the direction of rotation of the bearing 40, and therefore, the clearance adjustment can be performed reliably. Note that the bearing 40 may be a rolling bearing or a sliding bearing, or may be a radial bearing or a thrust bearing as long as it can reduce the sliding resistance between the adjustment spring 31 and the adjustment sleeve 33.

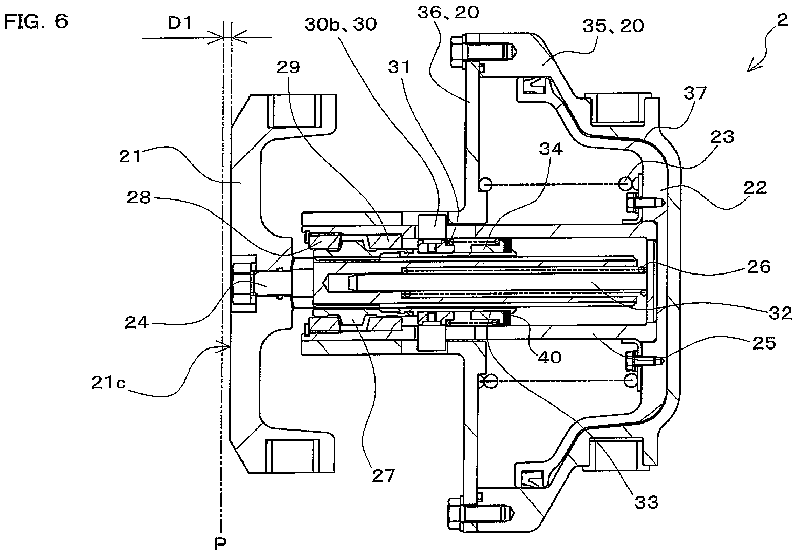

Next the operation of the brake cylinder device 2 will be described with reference FIGS. 6 to 20, which are cross-sectional views of the brake cylinder device 2. Note that the illustration of the bellows structure disposed between the brake output portion 21 and the cylinder body 20 is omitted in FIGS. 6 to 20. Also, FIGS. 6 to 20 are shown using the position of the cylinder body 20 as a reference, and the components other than the cylinder body 20 are shown in their relative positions with respect to the cylinder body 20.

Further, in FIGS. 6 to 16, the position of an end 21c of the brake output portion 21 in the braking direction that allows the brake output portion 21 to move relative to the cylinder body 20 to enable the braking operation is indicated by the two-dot chain line P (hereinafter, the position indicated by the two-dot chain line P is referred to as the "brake operating position P"). That is, in a state in which the position of the end 21c of the brake output portion 21 with respect to the cylinder body 20 has reached the brake operating position P (the position where a braking force can be generated), the pair of brake pads (13, 13) of the disk brake device 1 are in contact with the brake disc 101.

FIGS. 6 to 8 are cross-sectional views of the brake cylinder device 2 for illustrating a case where the brake cylinder device 2 is operated without performing automatic clearance adjustment by a clearance adjustment mechanism. The cross-sectional view of FIG. 6 shows a state before the braking operation is performed, or in other words, a break-released state. The distance D1 between the end 21c of the brake output portion 21 and the brake operating position P in this state is indicated by the arrows in the drawing.

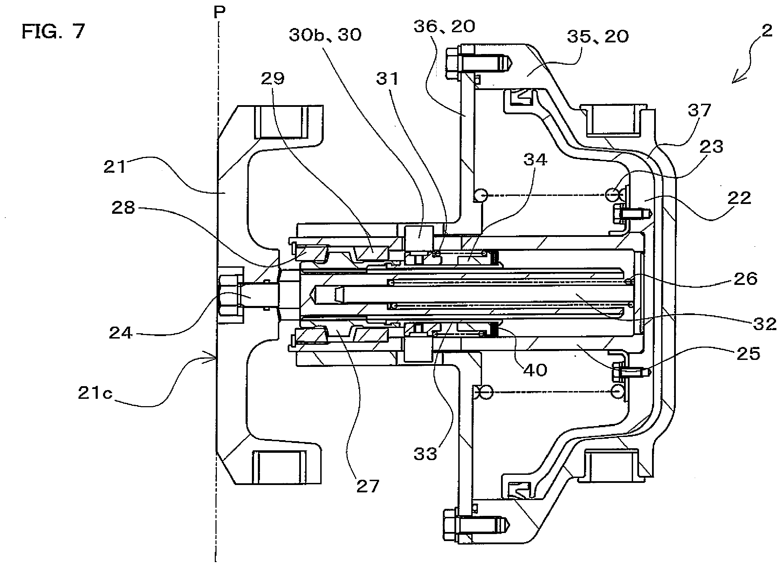

During the braking operation, first, a transition from the state shown in the cross-sectional view of FIG. 6 to the state shown in the cross-sectional view of FIG. 7 is made by supply of compressed air to the pressure chamber 37. That is, as compressed air is supplied to the pressure chamber 37, the piston 22 moves in the braking direction together with the guide tube 25 against the biasing force of the piston spring 23. Then, the threaded shaft 24 moves in the braking direction together with the guide tube 25 and the pusher spring 26, and the end 21c of the brake output portion 21 reaches the brake operating position P. Note that the state shown in FIG. 7 is a state at an instant when the pair of brake pads (13, 13) have come into contact with the brake disk 101 as a result of the end 21c of the brake output portion 21 having reached the brake operating position P, and no braking force has been generated in this state.

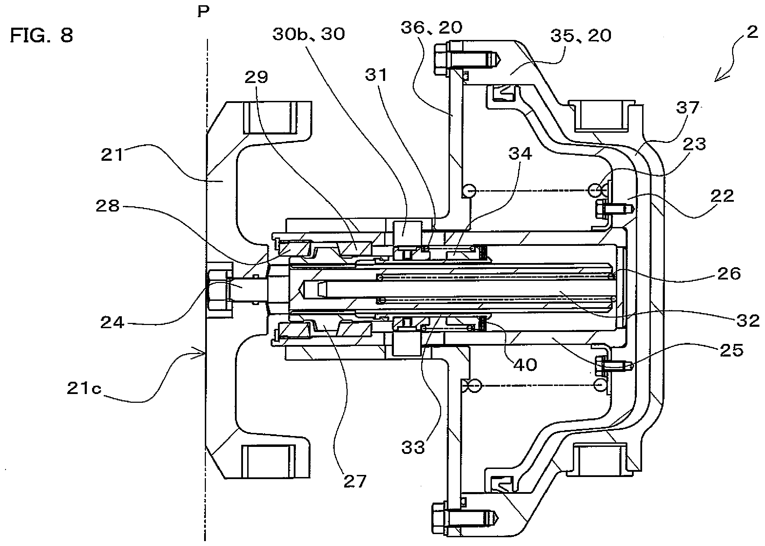

In the state shown in FIG. 7, the movement, in the braking direction, of the threaded shaft 24 and the clutch nut 27 threadably engaged therewith is constrained. Then, the supply of compressed air to the pressure chamber 37 is further continued from the state shown in FIG. 7, and thereby, as shown in the cross-sectional view of FIG. 8, the guide tube 25 moves in the braking direction together with the piston 22, which causes the front clutch 28 and the rear clutch 29 to move toward the front (in the braking direction) together with the guide tube 25. Consequently, the front clutch 28 that has been in contact with the clutch nut 27 is spaced apart from the clutch nut 27, and the rear clutch 29 that has been spaced apart from the clutch nut 27 is in contact with the clutch nut 27. Upon reaching the state shown in FIG. 8, the pair of brake pads (13, 13) press the brake disk 101, and braking force is output.

On the other hand, when the compressed air is discharged from the pressure chamber 37, the piston 22 moves in the anti-braking direction together with the guide tube 25 by the biasing force of the piston spring 23. Then, the front clutch 28 and the rear clutch 29 move to the rear (in the anti-braking direction) together with the guide tube 25. Consequently, the same state as the state shown in FIG. 7 is momentarily achieved. That is, the rear clutch 29 that has been in contact with the clutch nut 27 is spaced apart from the clutch nut 27, and the front clutch 28 that has been spaced apart from the clutch nut 27 is in contact with the clutch nut 27.

The discharge of the compressed air from the pressure chamber 37 is further continued from the state shown in FIG. 7, and thereby the piston 22, the guide tube 25, and the front clutch 28 move further in the anti-braking direction. Then, the clutch nut 27 in contact with the front clutch 28 and the threaded shaft 24 threadably engaged with the clutch nut 27 also move in the anti-braking direction. Consequently, a brake-released state is achieved as shown in FIG. 6. In the above-described braking operation and brake releasing operation, the clutch nut 27 does not rotate with respect to the threaded shaft 24, and therefore, the automatic clearance adjustment by the clearance adjustment mechanism will not be performed. That is, the distance D1 between the end 21c of the brake output portion 21 and the brake operating position P does not change before and after the timing at which the above-described braking operation and brake releasing operation are performed.

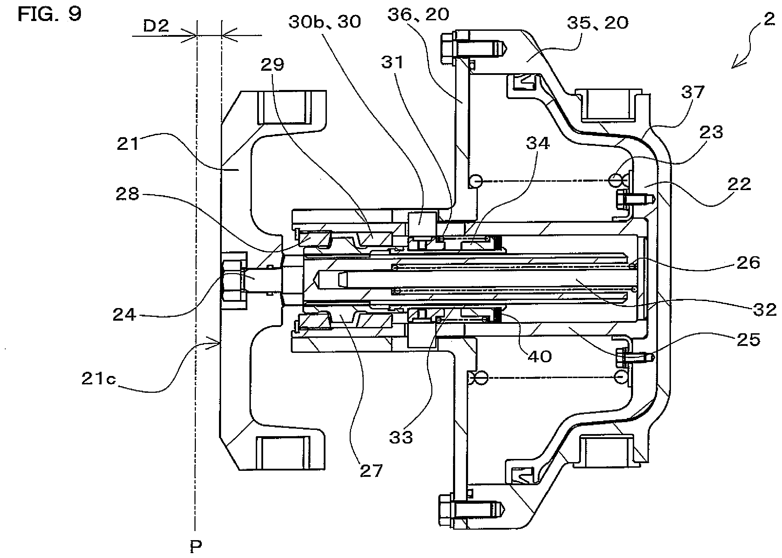

Next, the operation of the brake cylinder device 2 in the case of performing the automatic clearance adjustment by the clearance adjustment mechanism will be described with reference to FIGS. 9 to 16. The cross-sectional view of FIG. 9 shows a state before the braking operation is performed, or in other words a brake-released state. The distance D2 between the end 21c of the brake output portion 21 and the brake operating position P in this state is indicated by the arrows in the drawing. In the state shown in FIG. 9, the distance D2, which is the clearance from the end 21c of the brake output portion 21 up to the brake operating position P in the brake-released state, is increased, for example, as a result of wear of the brake pads 13. That is, in this state, the distance D2 is larger than the distance D1 (D2 > D1). In this case, as will be described below, the above-described clearance is automatically adjusted by the clearance adjustment mechanism composed of the clutch nut 27, the front clutch 28, the rear clutch 29, the threaded shaft 24, the guide tube 25, the pusher spring 26, the stopper 30, the adjustment spring 31, and so forth.

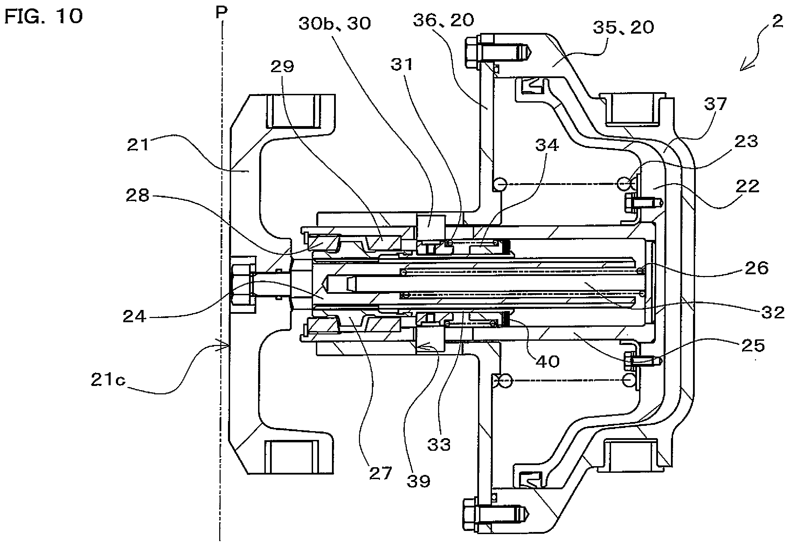

During the braking operation, first, a transition from the state shown in the cross-sectional view of FIG. 9 to the state shown in the cross-sectional view of FIG. 10 is made by supply of compressed air to the pressure chamber 37. That is, as compressed air is supplied to the pressure chamber 37, the piston 22 moves in the braking direction together with the guide tube 25 against the biasing force of the piston spring 23. Furthermore, the threaded shaft 24 moves in the braking direction together with the guide tube 25 and the pusher spring 26, and the stopper 30 and the adjustment spring 31 also move in the braking direction together with the adjustment sleeve 33 engaged with the clutch nut 27 threadably engaged with the threaded shaft 24. Then, as shown in the cross-sectional view of FIG. 10, the projecting portions 30b of the stopper 30 come into contact with the end of the stopper stroke restricting portions 39 in the braking direction. Consequently, the stopper 30 reaches its forward limit, and thereby the movement of the cylinder body 20 toward the front (in the braking direction) is restricted.

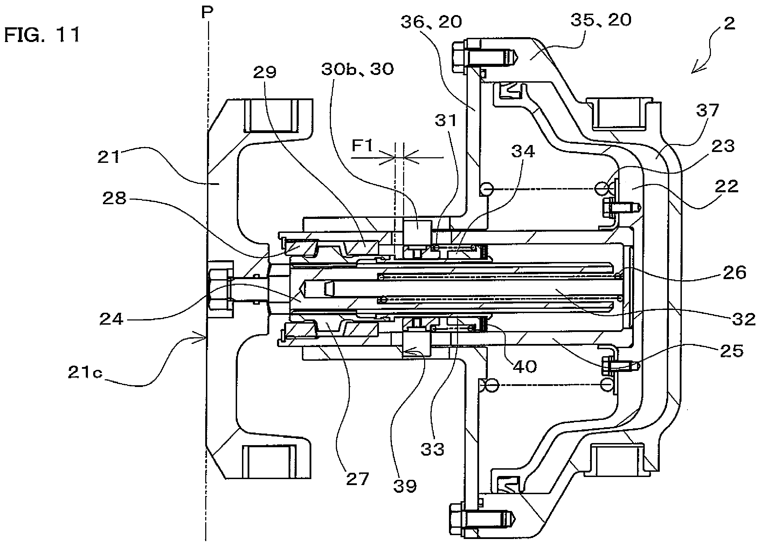

In the state shown in FIG. 10, the movement of the stopper 30 with respect to the cylinder body 20 is restricted, whereas the guide tube 25, the pusher spring 26, the threaded shaft 24, the clutch nut 27, the adjustment sleeve 33, the spring stopper 34, and the bearing 40 are in a state in which they are movable together with the piston 22. Also, the supply of compressed air to the pressure chamber 37 is further continued from the state shown in FIG. 10, and thereby the end 21c of the brake output portion 21 reaches the brake operating position P, resulting in a transition to the state shown in the cross-sectional view of FIG. 11. At this time, the adjustment spring 31 is compressed between the stopper 30 and the spring stopper 34 disposed at the end of the adjustment sleeve 33 in the anti-braking direction along with the movement of the above-described components (24 to 27, 33, 34, 40).

During the transition from the state shown in FIG. 10 to the state shown in FIG. 11, the range of movement of the stopper 30 is restricted, and thereby a force capable of biasing the clutch nut 27 in the anti-braking direction via the spring stopper 34, the bearing 40, and the adjustment sleeve 33 is accumulated in the adjustment spring 31 as the accumulated force of the adjustment spring 31. Then, as indicated by the arrows in FIG. 11, the adjustment sleeve 33 moves by a distance F1 relative to the stopper 30 whose range of movement is restricted by the cylinder body 20. The adjustment spring 31 is compressed by a dimension equal to the distance F1 (the dimension F1), and the accumulated force of the adjustment spring 31 is stored.

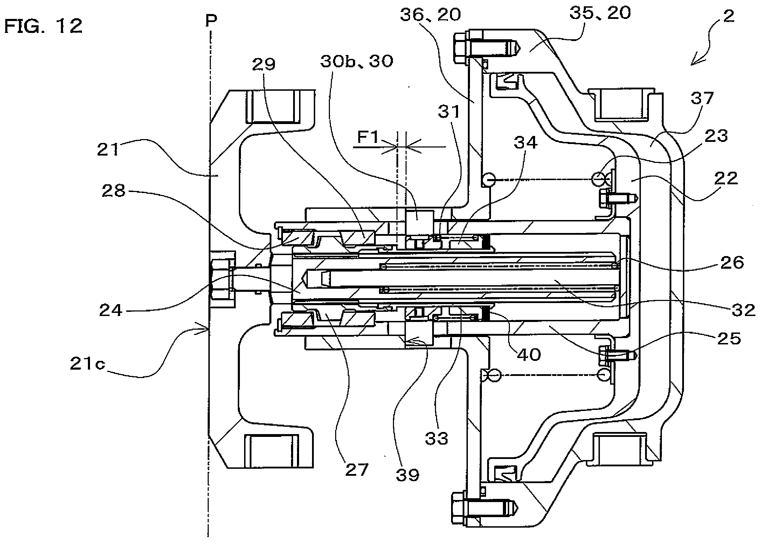

The state shown in FIG. 11 is a state at an instant when the pair of brake pads (13, 13) have come into contact with the brake disk 101 as a result of the end 21c of the brake output portion 21 having reached the brake operating position P, and no braking force has been generated in this state. In this state, the movement, in the braking direction, of the threaded shaft 24 and the clutch nut 27 threadably engaged there with is constrained. Then, the supply of compressed air to the pressure chamber 37 is further continued from the state shown in FIG. 11, and thereby, as shown in the cross-sectional view of FIG. 12, the guide tube 25 moves in the braking direction together with the piston 22, which causes the front clutch 28 and the rear clutch 29 to move toward the front (in the braking direction) together with the guide tube 25. Consequently, the front clutch 28 that has been in contact with the clutch nut 27 is spaced apart from the clutch nut 27, and the rear clutch 29 that has been spaced apart from the clutch nut 27 is in contact with the clutch nut 27. Upon reaching the state shown in FIG. 12, the pair of brake pads (13, 13) press the brake disk 101, and braking force is output. Note that in this state, the accumulated force of the adjustment spring 31 corresponding to the compressed dimension of the dimension F1 shown in FIG. 11 is maintained as it is.

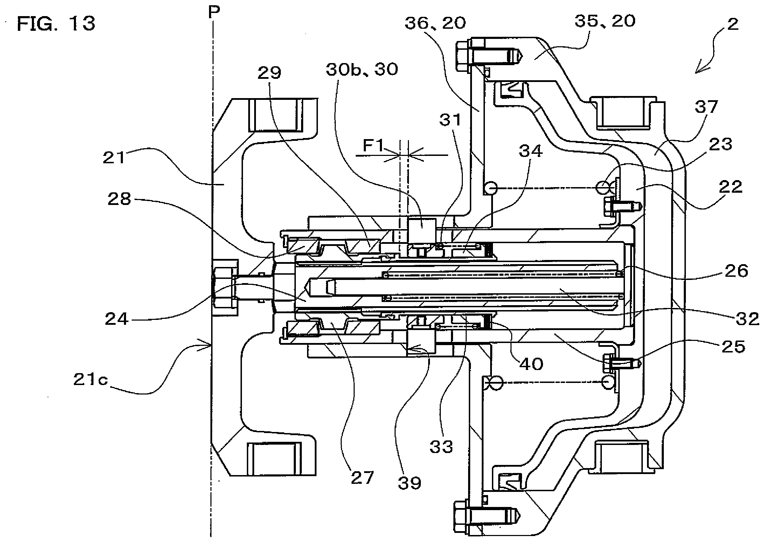

On the other hand, when the compressed air is discharged from the pressure chamber 37, the piston 22 starts moving in the anti-braking direction together with the guide tube 25 by the biasing force of the piston spring 23. Then, the front clutch 28 and the rear clutch 29 also start moving to the rear (in the anti-braking direction) together with the guide tube 25. At this time, although the clutch nut 27 undergoes a transition to the state in which it is spaced apart from the rear clutch 29 and is in contact with the front clutch 28, the threaded shaft 24 is biased in the braking direction by the pusher spring 26. Accordingly, as shown in the cross-sectional view of FIG. 13, the threaded shaft 24 and the brake output portion 21 do not move in the anti-braking direction, resulting in a state in which the clutch nut 27 is biased in the anti-braking direction by the accumulated force corresponding to the dimension F1 of the adjustment spring 31. At this time, a state occurs in which the contact of the clutch nut 27 with the rear clutch 29 is released and the clutch nut 27 is neither in contact with the front clutch 28, and the clutch nut 27 becomes rotatable with respect to the threaded shaft 24 in this state.

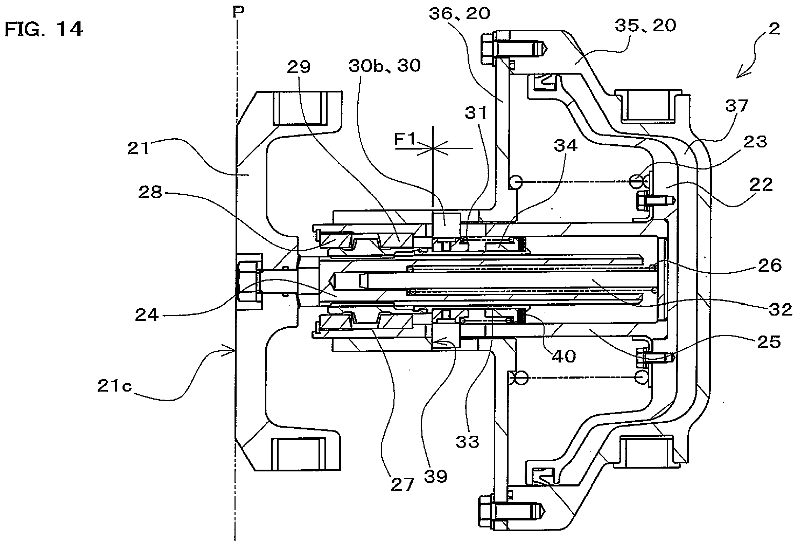

In the state in which the clutch nut 27 is in contact neither with the front clutch 28 nor with the rear clutch 29 and thus is rotatable with respect to the threaded shaft 24 as described above, the accumulated force of the adjustment spring 31 that corresponds to the dimension F1 causes the clutch nut 27 to rotate with respect to the threaded shaft 24 so as to move in the anti-braking direction. Thus, rotation of the clutch nut 27 with respect the threaded shaft 24 reduces the dimension F1 shown in FIG. 13. Also, as shown in FIG. 14, the state in which the clutch nut 27 is in contact neither with the front clutch 28 nor with the rear clutch 29 and thus rotates with respect to the threaded shaft 24 is continued until the dimension F1 becomes zero. Note that the rotation of the clutch nut 27 performed until the dimension F1 becomes zero does not necessarily be completed during the time in which the braking operation and the brake releasing operation are performed once, but may be completed during the time in which the operations corresponding to the braking operation and the brake releasing operation multiple times.

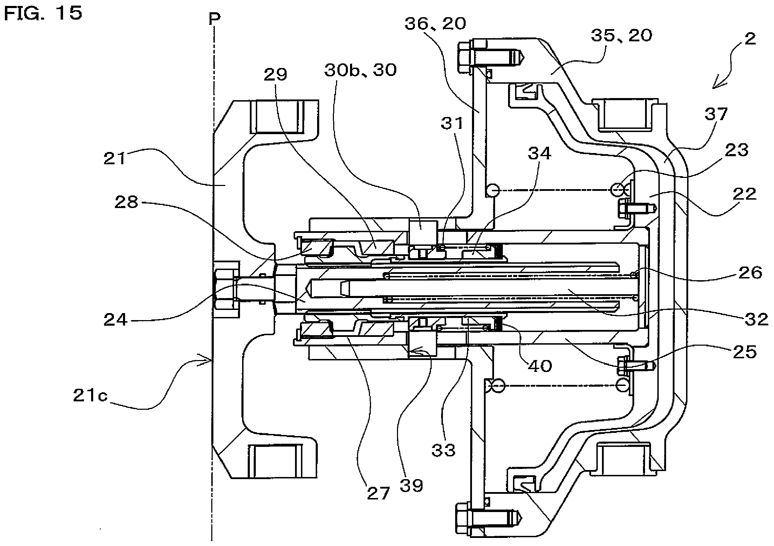

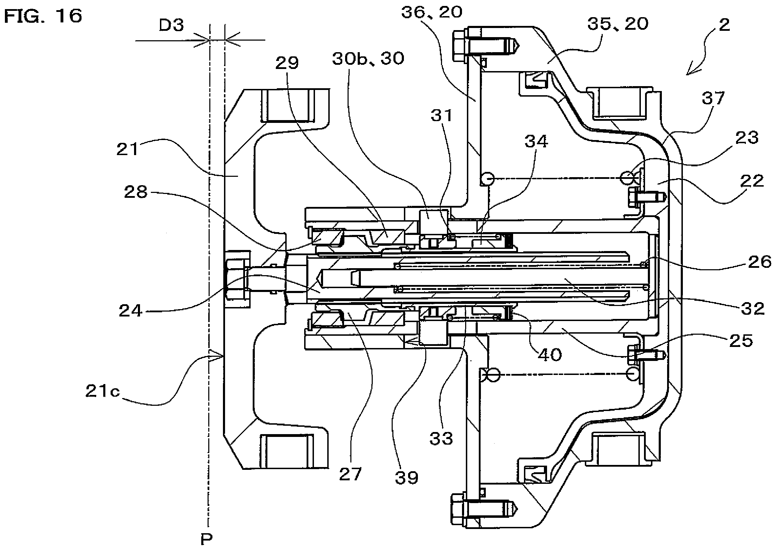

The discharge of the compressed air from the pressure chamber 37 is further continued from the state shown in FIG. 14, and thereby the piston 22, the guide tube 25, and the front clutch 28 move further in the anti-braking direction. Then, as shown in the cross-sectional view of FIG. 15, the front clutch 28 comes into contact with the clutch nut 27, which makes the clutch nut 27 unrotatable. Furthermore, as a result of the movement of the guide tube 25 in the anti-braking direction, the clutch nut 27 in contact with the front clutch 28 and the threaded shaft 24 threadably engaged with the clutch nut 27 also move in the anti-braking direction. Consequently, a brake-released state is achieved as shown in FIG. 16.

Then, in the brake-released state shown in FIG. 16, compared to the state before the braking operation and the brake releasing operation are performed, the distance between the end 21c of the brake output portion 21 and the brake operating position P changes to a distance D3, which is a distance smaller than the distance D2 (D3 < D2). That is, the clutch nut 27 moves relative to the threaded shaft 24 in the anti-braking direction in the middle of the brake releasing operation, and therefore, the brake releasing operation ends in a state in which the position of the threaded shaft 24 has moved further in the braking direction than in the state before the brake releasing operation. Then, a transition is made to a state in which the threaded shaft 24 and the brake output portion 21 have moved to positions projecting toward the cylinder body 20, as compared to the state before the braking operation and the brake releasing operation. Consequently, the clearance up to the brake operating position P in the brake-released state is automatically adjusted.

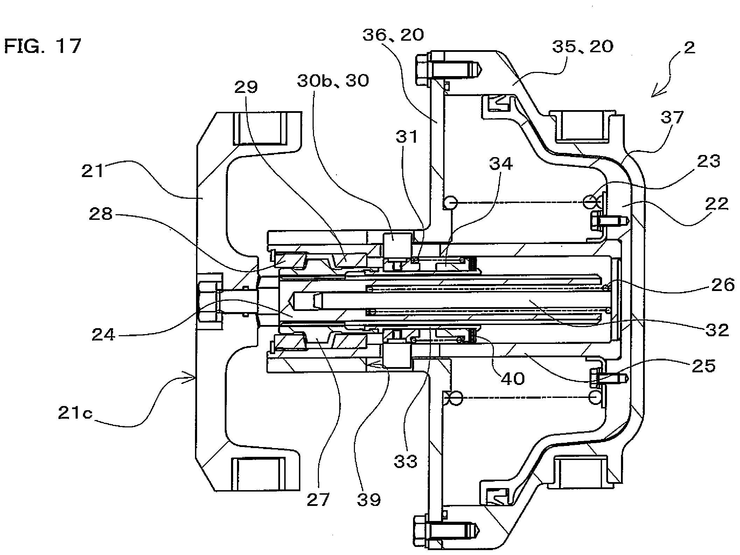

Next, with reference to FIGS. 17 to 20, a description will be given of the operation of the brake cylinder device 2 in the case of forcibly performing the clearance adjustment operation in a state in which the brake pads 13 do not come into contact with the brake disk 101 and braking force is not generated, or the so-called idling state (note that the clearance adjustment is performed using the force generated by the brake pads 13 coming into contact with the brake disk 101, and the clearance adjustment cannot be performed without such contact). The cross-sectional view of FIG. 17 shows a state before the compressed air is supplied to the pressure chamber 37 in the above-described idling state (i.e., a state corresponding to the above-described brake-released state). For example, the drawing shows a state after the replacement of the brake pads 13 of the disk brake device 1 has been performed and in which the clearance adjustment operation is about to be performed.

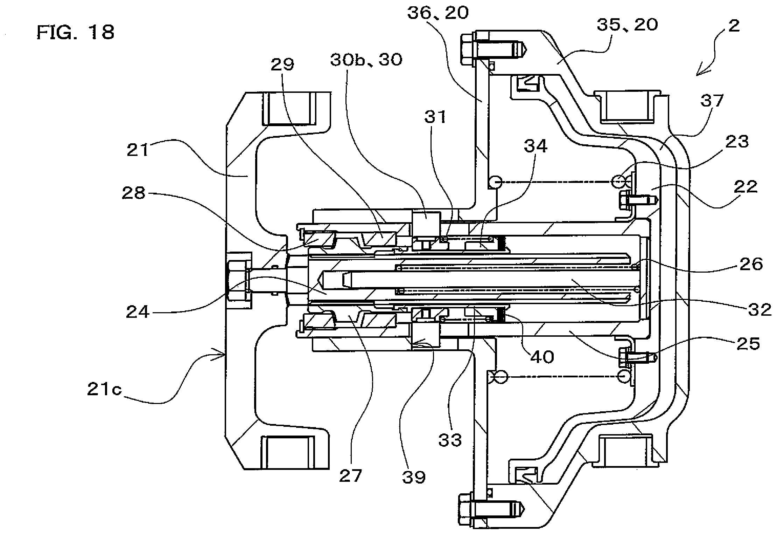

In the above case, first, a transition from the state shown in the cross-sectional view of FIG. 17 to the state shown in the cross-sectional view of FIG. 18 is made by supply of compressed air to the pressure chamber 37. That is, as compressed air is supplied to the pressure chamber 37, the piston 22 moves in the braking direction together with the guide tube 25 against the biasing force of the piston spring 23. Furthermore, the threaded shaft 24 moves in the braking direction together with the guide tube 25 and the pusher spring 26, and the stopper 30 and the adjustment spring 31 also move in the braking direction together with the adjustment sleeve 33 engaged with the clutch nut 27 threadably engaged with the threaded shaft 24. Then, as shown in the cross-sectional view of FIG. 18, the projecting portions 30b of the stopper 30 come into contact with the end of the stopper stroke restricting portions 39 in the braking direction. Consequently, the stopper 30 reaches its forward limit, and thereby the movement of the cylinder body 20 toward the front (in the braking direction) is restricted.

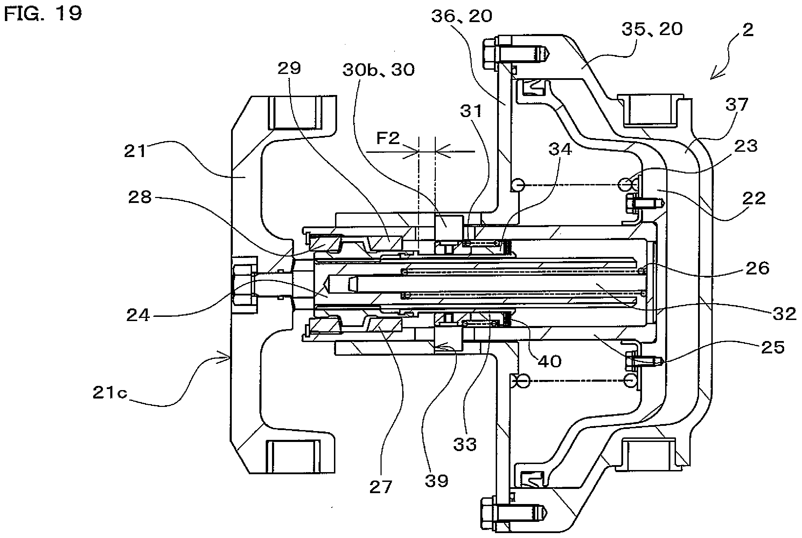

In the state shown in FIG. 18, the movement of the stopper 30 with respect to the cylinder body 20 is restricted, whereas predetermined components such as the threaded shaft 24 (24 to 27, 33, 34, 40) are in a state in which they are movable together with the piston 22. Also, the supply of compressed air to the pressure chamber 37 is further continued from the state shown in FIG. 18, and thereby the adjustment spring 31 is compressed between the stopper 30 and the spring stopper 34 disposed at the end of the adjustment sleeve 33 in the anti-braking direction along with the movement of the above-described components (24 to 27, 33, 34, 40). Then, the end of the spring stopper 34 in the braking direction comes into contact with the end of the ring portion 30a of the stopper 30 in the anti-braking direction, resulting in a transition to the state shown in the cross-sectional view of FIG. 19.

In the state shown in FIG. 19, a force capable of biasing the clutch nut 27 in the anti-braking direction via the spring stopper 34, the bearing 40, and the adjustment sleeve 33 is accumulated in the adjustment spring 31 as the accumulated force of the adjustment spring 31. At this time, as indicated by the arrows in FIG. 19, the adjustment sleeve 33 moves by a distance F2 relative to the stopper 30 whose range of movement is restricted by the cylinder body 20. The adjustment spring 31 is compressed by a dimension equal to the distance F2 (the dimension F2), and the accumulated force of the adjustment spring 31 is stored.

As shown in FIG. 19, in the state in which the movement of the stopper 30 is restricted and the stopper 30 and the spring stopper 34 are in contact with each other, the adjustment sleeve 33 whose end in the anti-braking direction engaged with the bearing 40 in contact with the spring stopper 34 can no longer move to the front (in the braking direction). Accordingly, the clutch nut 27 engaged with the adjustment sleeve 33 also can no longer move in the braking direction, and the clutch nut 27 can no longer move in the braking direction together with the piston 22, the guide tube 25, the pusher spring 26, and the threaded shaft 24.

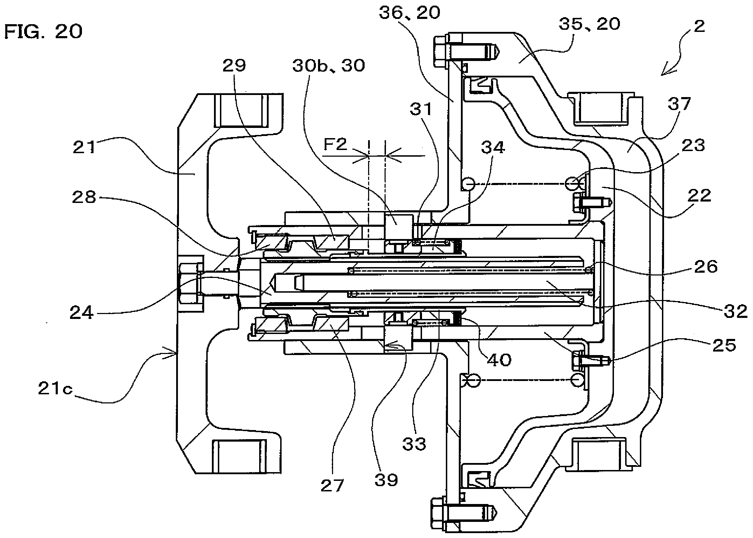

Then, the supply of compressed air to the pressure chamber 37 is further continued from the state shown in FIG. 19, and thereby a state occurs in which the clutch nut 27 is spaced apart from the front clutch 28, and remains spaced apart from and not in contact with the rear clutch 29 as well, as shown in the cross-sectional view of FIG. 20. Accordingly, the clutch nut 27 becomes rotatable with respect to the threaded shaft 24. Then, a state occurs in which the clutch nut 27 is biased in the anti-braking direction by the accumulated force corresponding to the dimension F2 of the adjustment spring 31.

In the state in which the clutch nut 27 is in contact neither with the front clutch 28 nor with the rear clutch 29 and thus is rotatable with respect to the threaded shaft 24 as described above, the accumulated force of the adjustment spring 31 that corresponds to the dimension F2 causes the clutch nut 27 to rotate with respect to the threaded shaft 24 so as to move in the anti-braking direction. Thus, rotation of the clutch nut 27 with respect the threaded shaft 24 reduces the dimension F2 shown in FIG. 20. Then, the state in which the clutch nut 27 is in contact neither with the front clutch 28 nor with the rear clutch 29 and thus rotates with respect to the threaded shaft 24 is continued until the dimension F2 becomes zero. Note that the rotation of the clutch nut 27 performed until the dimension F2 becomes zero does not necessarily be completed during the time in which the operations corresponding to the braking operation and the brake releasing operation are performed once, but may be completed during the time in which the operations corresponding to the braking operation and the brake releasing operation are performed multiple times.

Thus, in the idling state as well, the clutch nut 27 moves relative to the threaded shaft 24 in the anti-braking direction in the middle of the operation corresponding to the braking operation, and therefore, the operation corresponding to the braking operation ends in a state in which the position of the threaded shaft 24 has moved further in the braking direction than in the state before the operation corresponding to the braking operation. Then, a transition is made to a state in which the threaded shaft 24 and the brake output portion 21 have moved to positions projecting toward the cylinder body 20, as compared to the state before the operation corresponding to the braking operation. Consequently, the clearance up to the brake operating position P in the brake-released state has been automatically adjusted when the maintenance operation such as the replacement of the brake pads 13 has ended and a transition has been made from the idling state to the state in which the brake is operable.

As described thus far, with the brake cylinder device 2, the clearance adjustment mechanism is composed of the clutch nut 27, the front clutch 28, the rear clutch 29, the threaded shaft 24, the guide tube 25, the pusher spring 26, the stopper 30, the adjustment spring 31, and so forth. Accordingly, the clearance adjustment is not performed using elastic deformation of rubber or the like, and it is therefore possible to achieve a configuration that is less likely to be affected by the surrounding environment such as temperature and humidity. Also, it is not necessary to provide the bearing 40 in the structure for attaching the guide tube 25 to the piston 22, which makes it possible to reduce the radial dimension of the cylinder body on the rear side (the end in the anti-braking direction).

Therefore, according to this embodiment, for the brake cylinder device 2 including the clearance adjustment mechanism for automatically adjusting the clearance up to the brake operating position P in the brake-released state, it is possible to provide a configuration that is less likely to be affected by the surrounding environment such as temperature and humidity at low cost, and also achieve a reduction in the radial dimension of the cylinder body 20.

With the brake cylinder device 2, the pusher spring 26 that biases the threaded shaft 24 is disposed inside the threaded shaft 24 having a hollow structure, and is configured to bias the clutch nut 27 threadably engaged with the threaded shaft 24 toward the front clutch 28. Accordingly, the pusher spring 26 can be disposed by efficiently using the space in the brake cylinder device 2. This can increase the space efficiency in the brake cylinder device 2, which makes it possible to realize a further size reduction.

With the brake cylinder device 2, the pusher spring guide 32 is provided that extends inside the coil-shaped pusher spring 26 and restricts the deformation of the pusher spring 26 in the buckling direction. Accordingly, the dimension of the clearance to be adjusted by the clearance adjustment mechanism is increased, and therefore, the buckling of the pusher spring 26 can be efficiently prevented even if a long pusher spring 26 is required. Further, the pusher spring guide 32 provided so as to be movable together with the guide tube 25 is disposed such that its tip is slidable on the inside of the threaded shaft 24. Accordingly, it is possible, with a simple configuration of providing the shaft-like pusher spring guide 32, to readily achieve a structure that maintains the positional relationship between the threaded shaft 24 and the piston 22 such that they are displaced coaxially.

With the brake cylinder device 2, the front clutch 28 and the rear clutch 29 are provided as separate unitary members and are separately fixed to the guide tube 25. Accordingly, it is not necessary to provide each of the front and rear clutches (28, 29) disposed at the front and the rear, respectively, of the clutch nut 27 as a divided structure and perform coupling with additional coupling means. Likewise, it is not necessary to provide the clutch nut 27 at the front and the rear of which the front and rear clutches (28, 29) are disposed as a divided structure and perform coupling with additional coupling means. This can simplify the configuration for the front and rear clutches (28, 29) and the clutch nut 27, and consequently, the size and the weight of the brake cylinder device 2 as a whole can be reduced. Furthermore, due to the configuration in which the front and rear clutches (28, 29) are separate unitary members and are fixed to the guide tube 25, it is possible to set the dimensional configuration such that the inner circumferences of the front and rear clutches (28, 29) are located closer to the outer circumference of the threaded shaft 24, which makes it possible to realize a further size reduction for the brake cylinder device 2.

With the brake cylinder device 2, the front clutch 28 provided as a separate unitary member is fixed to the inner circumference of the guide tube 25 by threaded coupling. Accordingly, the front clutch 28 can be readily replaced at the time of maintenance, which makes it possible to increase the ease of maintenance.

With the brake cylinder device 2, the adjustment spring 31 is disposed between the tubular adjustment sleeve 33 disposed around the threaded shaft 24 and the stopper 30, and a force for moving the clutch nut 27 relative to the threaded shaft 24 in the anti-braking direction is accumulated during the clearance adjustment operation along with the relative movement of the adjustment sleeve 33 with respect to the stopper 30. Also, the adjustment sleeve 33 is provided as a member having flexibility, and the adjustment sleeve 33 and the clutch nut 27 are integrated by engagement of the engaging portion 33a on the adjustment sleeve 33 side and the engaged portion 27c on the clutch nut 27 side. Accordingly, the engaging portion 33a can be engaged with the engaged portion 27c by temporarily causing the adjustment sleeve 33 having flexibility to be elastically deformed, and therefore, the adjustment sleeve 33 and the clutch nut 27 can be integrated without using any additional fastening member. Thus, the configuration for integrating the adjustment sleeve 33 and the clutch nut 27 does not require any additional fastening member, and it is therefor possible to achieve a further size reduction for the brake cylinder device 2.

With the brake cylinder device 2, the adjustment sleeve 33 is configured to engage from inside of the clutch nut 27, and the dimension of the clearance between the inner circumference of the adjustment sleeve 33 and the top of the ridge of the thread 24a of the threaded shaft 24 is set to be smaller than the radial dimension of the indented portions of the engaging portion 33a and the engaged portion 27c that are fitted together (the length, in the radial direction of the adjustment sleeve 33, of overlap of the indented portions). Accordingly, the engaging portion 33a of the adjustment sleeve 33 having flexibility is disposed between the clutch nut 27 and the threaded shaft 24 that are formed of a metallic material, and, moreover, a dimensional relationship that can prevent disengagement of the engaging portion 33a of the adjustment sleeve 33 from the engaged portion 27c caused by deformation toward the threaded shaft 24. This makes it possible to firmly integrate the adjustment sleeve 33 and the clutch nut 27 even though the engagement configuration is simple.

With the brake cylinder device 2, the second end of the adjustment spring 31 biases the adjustment sleeve 33 via the bearing 40, and therefore, when the adjustment sleeve 33 is biased by the accumulated force of the adjustment spring 31, the clutch nut 27 smoothly rotates together with the adjustment sleeve 33 and moves in the braking direction. Also, the bearing 40 of the spring receiver is disposed such that the clearance to the guide tube 25 is substantially zero or is disposed so as to be in sliding contact with the guide tube 25, and therefore, the threaded shaft 24 can be supported to the guide tube 25 via the bearing 40 of the spring receiver, which makes it possible to prevent the threaded shaft 24 from being tilted with respect to the guide tube 25.

With the brake cylinder device 2, the spring stopper 34 is provided that restricts, to a predetermined amount or less, the amount of displacement of the adjustment spring 31 during the elastic deformation of the adjustment spring 31 such that the force for the clearance adjustment operation is accumulated. Accordingly, even if the clearance adjustment operation is forcibly performed in an operation in the idling state that does not generate braking force, the stroke of the adjustment spring 31 is restricted by the spring stopper 34. Accordingly, the adjustment spring 31 will not be excessively compressed or extended, and the clearance adjustment operation can be performed forcibly even in the idling state.

With the brake cylinder device 2, it is possible to forcibly perform the clearance adjustment operation even in the idling state as described above. Accordingly, by repeating operations corresponding to the braking operation and the brake releasing operation multiple times for the entire vehicle or the entire group of vehicles at once, the clearance is automatically adjusted in all brake cylinder devices 2. Thereby, when the brake pads 13 have been replaced, it is possible to automatically perform the clearance adjustment on all brake cylinder devices 2 in a vehicle or a group of vehicles at once, without the need to manually perform the clearance adjustment on brake cylinder devices 2 one by one. Accordingly, it is possible to significantly reduce the number of steps and time and effort in the operation associated with the replacement of brake pads 13, which makes it possible to considerably promote the efficiency.

With the brake cylinder device 2, in a state in which the front clutch 28 and the clutch nut 27 are in contact with each other and the brake is not operated, the front clutch 28 and the clutch nut 27 engage with each other via the teeth (27b, 28a) formed on the mutually facing surfaces, and it is therefore possible to prevent the clutch nut 27 from rotating due to vibrations or the like. Also, even in a state in which the biasing force of the pusher spring 26 has been reduced due to an increase in the amount of clearance adjustment as the clearance adjustment operation is repeatedly performed (state in which the pusher spring 26 is extended), it is possible to prevent the clutch nut 27 from rotating due to vibrations or the like when the brake is not operated.

With the brake cylinder device 2, the nut member 38 threadably engages with the tip of the threaded shaft 24 disposed so as to passes through the brake output portion 21 and face outward and on which the hexagon socket 24c serving as the operation engaging portion is provided, and thereby the threaded shaft 24 and the brake output portion 21 are engaged with each other. Accordingly, by loosening the nut member 38 to release the engagement of the threaded shaft 24 with the brake output portion 21 and also operating the threaded shaft 24 to rotate with an operation tool, the threaded shaft 24 can be rotated manually, and the positional relationship between the threaded shaft 24 and the clutch nut 27 can be readily brought back into the initial state, which is the state before the clearance adjustment is performed.

According to this embodiment, for the disk brake device 1 provided with the brake cylinder device 2 including the clearance adjustment mechanism for automatically adjusting the clearance up to the brake operating position P in the brake-released state, it is possible to provide a configuration that is less likely to be affected by the surrounding environment such as temperature and humidity at low cost, and also achieve a reduction in the radial dimension of the cylinder body 20.

### (Second Embodiment)

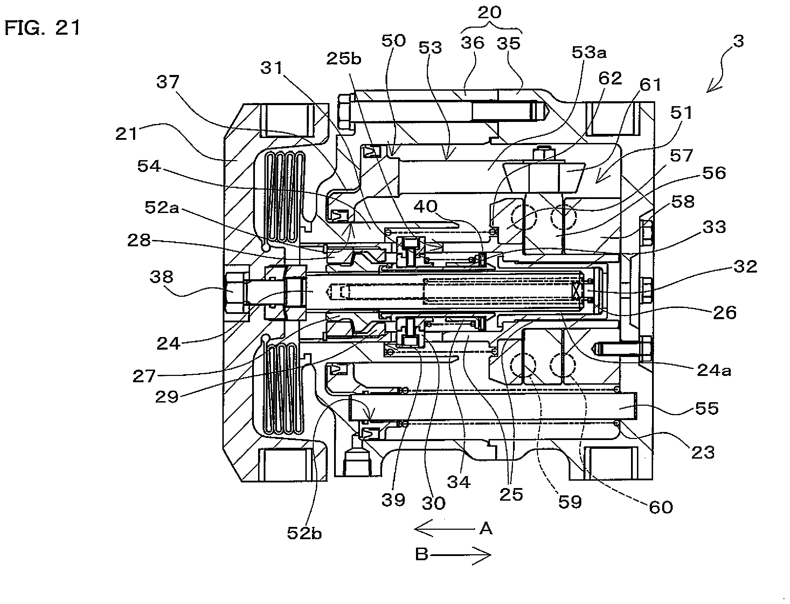

Next, a brake cylinder device 3 according to a second embodiment of the present invention will be described. FIG. 21 is a cross-sectional view of a brake cylinder device 3 according to the second embodiment. As with the brake cylinder device 2 of the first embodiment, the brake cylinder device 3 shown in FIG. 21 is provided as a brake cylinder device with which the disk brake device 1 is equipped. Note that FIG. 21 shows the outer shape, rather than the cross section, of some of the components of the brake cylinder device 3.

As with the brake cylinder device 2 of the first embodiment, the brake cylinder device 3 includes a cylinder body 20, a brake output portion 21, a piston 50, piston springs 23, a threaded shaft 24, a guide tube 25, a pusher spring 26, a clutch nut 27, a front clutch 28, a rear clutch 29, a stopper 30, an adjustment spring 31, a pusher spring guide 32, an adjustment sleeve 33, a spring stopper 34, a nut member 38, a bearing 40, and so forth. Of the above-described components, those other than the adjustment sleeve 33 are formed of, for example, a metallic material such as an iron-based material, and the adjustment sleeve 33 is formed of, for example, a resin material.

As described above, the brake cylinder device 3 is configured in the same manner as the brake cylinder device 2 of the first embodiment. However, the brake cylinder device 3 is different from the brake cylinder device 2 of the first embodiment in that a force amplifying mechanism 51 is further provided and that the direction of movement of the piston 50 is configured such that the piston 50 moves in the direction opposite to the direction of movement of the piston 22 of the first embodiment. Note that in the following description of the brake cylinder device 3, a description will only be given of configurations that are different from those of the first embodiment. Those elements configured to have the same functions as in the first embodiment are denoted by identical reference numerals, and the description thereof has been omitted.

The piston 50 includes a disk-like portion 52, a pair of plate-like portions 53 (only one of the plate-like portions 53 is shown in FIG. 21) that project from the disk-like portion 52 parallel to the threaded shaft 24 and the guide tube 25 in the anti-braking direction (the direction indicated by the arrow B in FIG. 21). Additionally, the second casing portion 36 of the cylinder 20 is provided with a cylinder portion 54 extending toward the first casing portion 35 side (i.e., the anti-braking direction) thereinside. Also, the disk-like portion 52 has a through hole 52a formed at the center, and the cylinder portion 54 of the cylinder body 20 passes through the through hole 52a. Thereby, the piston 50 is disposed between the outer circumferential face of the cylinder portion 54 and the inner circumferential face of the second casing portion 36. That is, the piston 50 is disposed so as to partition the space between the outer circumferential face of the cylinder portion 54 and the inner circumferential face of the second casing portion 36 into two, and is configured to be movable relative to the cylinder body 20 along the axial direction. Also, the pressure chamber 37 is defined between the piston 50 and the second casing portion 36.

Note that cylinder body 30 is provided with a pair of guide shafts 55 (only one of the guide shafts 55 is shown in FIG. 21) extending parallel to the axial direction of the threaded shaft 24 and the guide tube 25. Also, the disk-like portion 52 of the piston 50 is provided with guide apertures 52b through which the guide shafts 55 respectively pass. Further, the piston springs 23 for biasing the piston 50 toward the brake output portion 21 side (i.e., toward the braking direction, which is the direction indicated by the arrow A in FIG. 21) are respectively disposed around the guide shafts 55.

The plate-like portions 53 of the piston 50 are each provided with an inclined surface 53a that is inclined in a spiral fashion with respect to the direction of the central axis of the threaded shaft 24 and the guide tube 25 and the circumferential direction about the central axis. Note that rollers 61 rotatably attached to a pivot member 56, which will be described below, are disposed so as to respectively come into contact with the inclined surfaces 53a of the plate-like portions 53.

The force amplifying mechanism 51 is provided as a mechanism for amplifying the force generated in the piston 50 and exerting the force on the guide tube 25 such that the guide tube 25, the pusher spring 26, the threaded shaft 24, and so forth are moved in the braking direction (the direction indicated by the arrow A in FIG. 21), which is opposite to the direction of movement of the piston 50, when the piston 50 moves in the anti-braking direction. That is, when the piston 50 moves in the anti-braking direction inside the cylinder body 20 as a result of supply of compressed air to the pressure chamber 37, the force amplified by the force amplifying mechanism 51 acts on the guide tube 25 attached to the force amplifying mechanism 51, and the guide tube 25, the pusher spring 26, the threaded shaft 24, and the like move in the braking direction. Accordingly, the brake output portion 21 connected to the threaded shaft 24 moves in the braking direction via the force amplifying mechanism 51 that amplifies the force generated in the piston 50 with the movement of the piston 50 in the anti-braking direction.

The force amplifying mechanism 51 includes the above-described inclined surfaces 53a provided in the piston 50, the pivot member 56, a first receiving member 57, a second receiving member 58, a first rolling member 59, a second rolling member 60, and so forth.

The pivot member 56 is provided as a disk-like member that pivots about the central axis of the threaded shaft 24 and the guide tube 25 in a predetermined direction of rotation, and has a through hole formed at the center. Also, the pivot member 56 is configured to be biased by the inclined surfaces 53a of the piston 50 when the piston 50 has moved in the anti-braking direction, and to pivot about the central axis of the threaded shaft 24 and the guide tube 25 in the above-described predetermined direction of rotation. Note that the threaded shaft 24 and the guide tube 25 are provided so as not to pivot about the central axis with respect to the cylinder body 20, and are configured to move in the braking direction along with the pivoting of the pivot member 56 in the above-described predetermined direction of rotation. Further, the pivot member 56 is provided with a pair of shaft portions extending radially outward from the outer circumferential face of the disk-like portion, and rollers 61 coming into contact with the inclined surfaces 53a of the piston 50 on their outer circumferential faces are rotatably attached to the shaft portions.

The first receiving member 57 is provided as a disk-like member having a through hole formed at the center, is disposed about the central axis of the threaded shaft 24 and the guide tube 25, and is fixed to the outer circumference of the guide tube 25. Also, the first receiving member 57 is disposed so as to face the pivot member 56 on the braking direction side in a direction parallel to the direction of the central axis of the threaded shaft 24 and the guide tube 25.

Further, the surface of the pivot member 56 that faces the first receiving member 57 is provided with first inclined grooves (not shown) that are formed such that the depth thereof changes in inclination with respect to the pivoting direction of the pivot member 56. Also, first rolling members 59 (indicated by the dashed line in FIG. 21) capable of rolling along the inner surface of the first inclined grooves are disposed in the first inclined grooves. The first rolling members 59 are provided as spherical members, and are supported in a state of being sandwiched by the first receiving member 57 and the pivot member 56. A plurality of the above-described first inclined grooves and first rolling members 59 are provided so as to be positioned along the circumference of a circle about the central axis of the threaded shaft 24 and the guide tube 25. Note that the spring 62 is disposed between a stepped portion formed on inner circumference of the end of the first receiving member 57 in the braking direction and a stepped portion formed on the inner wall of the cylinder portion 54 of the second casing portion 36. The spring 62 biases the first receiving member 57 in the anti-braking direction. Further, in the cylinder body 20 of the brake cylinder device 3, a portion of the cylinder portion 54 that forms a stepped portion coming into contact with the spring 62 is configured to also serve the function of the stopper stroke restricting portions 39.

The second receiving member 58 is provided as a disk-like member having a through hole formed at the center, is disposed about the central axis of the threaded shaft 24 and the guide tube 25, and is fixed to the first casing portion 35 of the cylinder body 20. Also, the second receiving member 58 is disposed so as to face the pivot member 56 on the anti-braking direction in a direction parallel to the direction of the central axis of the threaded shaft 24 and the guide tube 25, or in other words, is disposed so as to face the surface opposite to the surface of the pivot member 56 that faces the first receiving member 57.

Further, the surface of the pivot member 56 that faces the second receiving member 58 is provided with second inclined grooves (not shown) that are formed such that the depth thereof changes in inclination with respect to the pivoting direction of the pivot member 56. Also, second rolling members 60 (indicated by the dashed line in FIG. 21) capable of rolling along the inner surface of the second inclined grooves are disposed in the second inclined grooves. The second rolling members 60 are provided as spherical members, and are supported in a state of being sandwiched by the pivot member 56 and the second receiving member 58. A plurality of the above-described second inclined grooves and second rolling members 60 are provided so as to be positioned along the circumference of a circle about the central axis of the threaded shaft 24 and the guide tube 25.

In the brake cylinder device 3, compressed air is supplied to the pressure chamber 37 during the braking operation, and thereby the piston 50 moves in the anti-braking direction against the biasing force of the piston spring 23, which causes rotation of the rollers 61 in contact with inclined surfaces 53a of the piston 50. Then, the rollers 61 rotate with respect to the shaft portions of the pivot member 56 and the pivot member 56 pivots about the central axis of the threaded shaft 24 and the guide tube 25 in a predetermined direction of rotation. As a result of pivoting of the pivot member 56, the first rolling members 59 roll in the first inclined grooves and the second rolling members 60 roll in the second inclined grooves. Thereby, the pivot member 56 and the first receiving member 57 move in the braking direction relative to the cylinder body 20. Then, the guide tube 25, the pusher spring 26, the threaded shaft 24, and the like move in the braking direction, which causes the brake output portion 21 to move in the braking direction.

On the other hand, when the brake releasing operation is performed in the brake cylinder device 3, the compressed air is discharged from the pressure chamber 37, and the piston 50 moves in the braking direction by the biasing force of the piston spring 23. Then, the pivot member 56, the first receiving member 57, the first rolling members 59, and the second rolling members 60 move in the direction opposite to that in the case of the above-described braking operation. Thereby, the guide tube 25, the pusher spring 26, the threaded shaft 24, and the like move in the anti-braking direction, which causes the brake output portion 21 to move in the anti-braking direction. Since the first receiving member 57 is biased in the anti-braking direction by the spring 62 during the brake releasing operation as well, the first rolling members 59 roll in the first inclined grooves and the second rolling members 60 roll in the second inclined grooves.

Note that the clearance adjustment mechanism composed of the clutch nut 27, the front clutch 28, the rear clutch 29, the threaded shaft 24, the guide tube 25, the pusher spring 26, the stopper 30, the adjustment spring 31, and so forth operates in the same manner as in the case of the first embodiment. Therefore, in this embodiment as well, for the brake cylinder device 3 including the clearance adjustment mechanism for automatically adjusting the clearance up to the brake operating position in the brake-released state, it is possible to provide a configuration that is less likely to be affected by the surrounding environment such as temperature and humidity at low cost, and also achieve a reduction in the radial dimension of the cylinder body 20, as with the first embodiment.

### (Modifications)

Although embodiments of the present invention have been described thus far, the present invention is not limited to the above-described embodiment, and various modifications may be made within the scope recited in the claims. For example, the following modifications are possible.
(1) Although the first embodiment has been described, taking as an example, a configuration in which the pusher spring is disposed so as to be capable of biasing the threaded shaft with respect to the guide tube toward the braking direction, this need not be the case. It is possible to adopt a configuration in which the pusher spring is disposed so as to be capable of biasing the threaded shaft with respect to the piston toward the braking direction.
(2) The shape and the arrangement of the adjustment spring, the stopper, the adjustment sleeve, and the spring stopper are not limited to the examples described in the embodiments, and modifications may be made. Also, modifications may be made to the shape of the clutch nut, the front clutch, and the rear clutch.
(3) Although the above embodiments have been described, taking as an example, a configuration in which only the front clutch is fixed to the inner circumference of the guide tube by threaded coupling, this need not be the case. The rear clutch may also be fixed to the inner circumference of the guide tube by threaded coupling. Further, the front clutch may be fixed to the inner circumference of the guide tube by press fitting.
(4) Although the above embodiments have been described, taking as an example, a configuration in which the teeth capable of engaging the front clutch with the clutch nut are formed on both the surface of the front clutch that faces the clutch nut and the surface of the clutch nut that faces the front clutch, this need not be the case. It is also possible to adopt a configuration in which the teeth are formed on one of the mutually facing surfaces.
(5) Although the above embodiments have been described, taking as an example, a configuration in which compressed air is used as the pressure fluid for operating the brake cylinder device, the present invention is not limited thereto. The brake cylinder device may be operated with other pressure fluids (e.g., pressure oil).
(6) In the case where the force amplifying mechanism is provided in the brake cylinder device, the invention is not limited to the exemplary configuration described in the second embodiment, and various modifications may be made to the configuration of the force amplifying mechanism. For example, it is also possible to adopt a configuration in which the force amplifying mechanism includes a receiving member fixed to the guide tube, the pivot member is provided so as to be threaded into the thread formed on the outer circumferential face of the receiving member, and the receiving member moves in the braking direction by pivoting of the pivot member in a predetermined direction of rotation.

### Industrial Applicability

The present invention is widely applicable to a brake cylinder device including a clearance adjustment mechanism for automatically adjusting a clearance up to a brake operating position in a brake-released state, and a disk brake device including the brake cylinder device.

### Descriptions of Reference Numerals

- 2: Brake cylinder device
- 20: Cylinder body
- 21: Brake output section
- 22: Piston
- 23: Piston spring
- 24: Threaded shaft
- 25: Guide tube
- 26: Pusher spring
- 27: Clutch nut
- 28: Front clutch
- 29: Rear clutch
- 30: Stopper
- 31: Adjustment spring

## Claims

1. A brake cylinder device (2, 3) comprising:
a cylinder body (20) having a hollow interior;
a piston (22, 50) that defines a pressure chamber (37) inside the cylinder body (20) and to which a biasing force generated by a piston spring (23) is transmitted, the piston (22, 50) moving relative to the cylinder body (20) against the biasing force of the piston spring (23) by supply of pressure fluid to the pressure chamber (37);
a brake output portion (21) that is provided so as to be movable together with the piston (20) or provided so as to be movable via a force amplifying mechanism (51) for amplifying a force generated in the piston (50) as a result of movement of the piston (50), the brake output portion (21) being movable in a braking direction in which it projects from the cylinder body (20) and an anti-braking direction in which it approaches the cylinder body (20);
a threaded shaft (24) that is connected to the brake output portion (21) and has a thread (24a) formed on an outer circumference thereof;
a guide tube (25) that is attached to the piston (22) or the force amplifying mechanism (50) and accommodates the threaded shaft (24) thereinside;
a pusher spring (26) disposed so as to be capable of biasing the threaded shaft (24) toward the braking direction to the guide tube (25) or the piston(22);
a clutch nut (27) for threadably engaging with a tip of the threaded shaft (24) disposed on the brake output portion (21) side with respect to the cylinder body (20);
a front clutch (28) disposed so as to be capable of coming into contact with the clutch nut (27) on a front side, which is the brake output portion (21) side with respect to the clutch nut (27);
a rear clutch (29) disposed so as to be capable of coming into contact with the clutch nut (27) via a predetermined interval from the front clutch (28) on a rear side, which is a side opposite to the brake output portion (21) side with respect to the clutch nut (27);
a stopper (30) that is disposed so as to be movable relative to the clutch nut (27) and the guide tube (25) along the axial direction of the threaded shaft (24) and whose movable range is restricted with respect to the cylinder body (20); and
an adjustment spring (31) that is in contact with or connected to the stopper (30) at a first end thereof and is capable of biasing the clutch nut (27) toward the anti-braking direction.

2. The brake cylinder device (2, 3) according to claim 1,
wherein the threaded shaft (24) has a hollow interior formed so as to be open toward a side opposite to the brake output portion (21), and
the pusher spring (26) biases the clutch nut (27) threadably engaged with the threaded shaft (24) toward the front clutch (28) by biasing the threaded shaft (24) from inside.

3. The brake cylinder device (2, 3) according to claim 2,
further comprising a pusher spring guide (32) that is formed as a shaft-like portion provided so as to be movable together with the guide tube (25) and is inserted inside the pusher spring (26) provided as a coil-shaped spring to restrict deformation of the pusher spring (26) in the buckling direction,
wherein the pusher spring guide (32) is disposed such that a tip thereof is slidable on the inside of the threaded shaft (24).

4. The brake cylinder device (2, 3) according to any one of claims 1 to 3,
wherein the front clutch (28) and the rear clutch (29) are provided as separate unitary members, and are each fixed to the guide tube (25).

5. The brake cylinder device (2, 3) according to claim 4,
wherein at least one of the front clutch (28) and the rear clutch (29) is fixed to an inner circumference of the guide tube (25) by threaded coupling.

6. The brake cylinder device (2, 3) according to any one of claims 1 to 5,
further comprising an adjustment sleeve (33) that is provided as a tubular member disposed around the threaded shaft (24) and having flexibility, and is biased toward the anti-braking direction by a second end of the adjustment spring (31) whose first end is in contact with or connected to the stopper (30),
wherein the clutch nut (27) and the adjustment sleeve (33) are configured integrally by engagement of an engaging portion (33a) formed on the adjustment sleeve (33) with an engaged portion (27c) formed on the clutch nut (27).

7. The brake cylinder device (2, 3) according to claim 6,
wherein the engaging portion (33a) of the adjustment sleeve (33) engages from inside with the engaged portion (27c) formed on an inner circumference of the clutch nut (27), and
a clearance formed between an inner circumference of the adjustment sleeve (33) and the top of the ridge of the thread of the threaded shaft (24) has a smaller dimension in the radial direction of the adjustment sleeve (33) than a dimension, in the radial direction of the adjustment sleeve (33), of indented portions of the engaging portion (33a) and the engaged portion (27c) that are fitted together.

8. The brake cylinder device (2, 3) according to claim 7,
wherein the adjustment spring (31) is disposed so as to bias, at the second end thereof, a spring receiver attached to the adjustment sleeve (33), and
the spring receiver is disposed such that a clearance formed between the outer circumference of the spring receiver and the inner circumference of the guide tube (25) has a dimension in the radial direction of the guide tube (25) that is substantially zero, or is disposed such that the outer circumference of the spring receiver and the inner circumference of the guide tube (25) are in sliding contact.

9. The brake cylinder device (2, 3) according to claim 8, wherein the spring receiver includes a bearing (40).

10. The brake cylinder device (2, 3) according to any one of claims 1 to 9,
further comprising a spring stopper (34) that restricts, to a predetermined amount or less, the amount of displacement of the adjustment spring (31) due to elastic deformation caused by relative displacement of a second end of the adjustment spring (31) with respect to the first end thereof that is in contact with or connected to the stopper (30).

11. The brake cylinder device (2, 3) according to any one of claims 1 to 10,
wherein teeth capable of engaging the front clutch (28) with the clutch nut (27) are formed on at least one of a surface of the front clutch (28) that faces the clutch nut (27) and a surface of the clutch nut (27) that faces the front clutch (28).

12. The brake cylinder device (2, 3) according to any one of claims 1 to 11,
wherein the threaded shaft (24) is provided, at a tip thereof, with an operation engaging portion capable of engaging with an operation tool, and is disposed such that the tip passes through the brake output portion (21) and faces outward, and
a nut member (38) is further provided for threadably engaging with an outer circumference of the tip of the threaded shaft (24) and engaging the threaded shaft (24) with the brake output portion (21).

13. A disk brake device comprising (1): the brake cylinder device (2, 3) according to any one of claims 1 to 12; and a caliper body (11) that is equipped with the brake cylinder device (2, 3) and is attached to so as to be displaceable relative to a vehicle in the direction of an axle,
wherein operation of the brake cylinder device (2, 3) causes a disk on the axle side to be sandwiched by a pair of brake pads attached to the caliper body (11), thereby generating braking force.

## Patentansprüche

1. Bremszylindervorrichtung (2, 3), umfassend:
einen Zylinderkörper (20), der einen hohlen Innenraum aufweist;
einen Kolben (22, 50), der eine Druckkammer (37) im Inneren des Zylinderkörper (20) definiert und zu dem eine durch eine Kolbenfeder (23) generierte Vorspannkraft übertragen wird, wobei sich der Kolben (22, 50) durch die Einleiten von Druckfluid in die Druckkammer (37) entgegen der Vorspannkraft der Kolbenfeder (23) relativ zu dem Zylinderkörper (20) bewegt;
einen Bremsausgabeabschnitt (21), der so ausgebildet ist, dass er zusammen mit dem Kolben (20) beweglich ist, oder so ausgebildet ist, dass er über einen Kraftverstärkungsmechanismus (51) zum Verstärken einer Kraft beweglich ist, die in dem Kolben (50) infolge der Bewegung des Kolbens (50) generiert wird, wobei der Bremsausgabeabschnitt (21) in einer Bremsrichtung beweglich ist, in der er von dem Zylinderkörper (20) vorsteht, und in einer Brems-Gegenrichtung beweglich ist, in der er sich dem Zylinderkörper (20) nähert;
eine Gewindewelle (24), die mit dem Bremsausgabeabschnitt (21) verbunden ist und an deren Außenumfang ein Gewinde (24a) ausgebildet ist;
ein Führungsrohr (25), das an dem Kolben (22) oder dem Kraftverstärkungsmechanismus (50) angebracht ist und die Gewindewelle (24) in sich aufnimmt;
eine Drückerfeder (26), die so angeordnet ist, dass sie die Gewindewelle (24) in der Bremsrichtung zu dem Führungsrohr (25) oder dem Kolben (22) vorspannen kann;
eine Kupplungsmutter (27) für einen Schraubeingriff mit einer Spitze der Gewindewelle (24), die auf der Seite des Bremsausgabeabschnitts (21) mit Bezug auf den Zylinderkörper (20) angeordnet ist;
eine vordere Kupplung (28), die so angeordnet ist, dass sie auf einer Vorderseite, die die Seite des Bremsausgabeabschnitts (21) mit Bezug auf die Kupplungsmutter (27) ist, in Kontakt mit der Kupplungsmutter (27) kommen kann;
eine hintere Kupplung (29), die so angeordnet ist, dass sie über einen zuvor festgelegten Abstand von der vorderen Kupplung (28) auf einer Rückseite, die eine Seite gegenüber der Seite des Bremsausgabeabschnitts (21) mit Bezug auf die Kupplungsmutter (27) ist, in Kontakt mit der Kupplungsmutter (27) kommen kann;
einen Stopper (30), der so angeordnet ist, dass er relativ zu der Kupplungsmutter (27) und dem Führungsrohr (25) entlang der axialen Richtung der Gewindewelle (24) beweglich ist, und dessen Bewegungsbereich mit Bezug auf den Zylinderkörper (20) begrenzt ist; und
eine Einstellfeder (31), die mit dem Stopper (30) an einem ersten Ende in Kontakt steht oder verbunden ist, und in der Lage ist, die Kupplungsmutter (27) in Richtung der Brems-Gegenrichtung vorzuspannen.

2. Bremszylindervorrichtung (2, 3) nach Anspruch 1, wobei die Gewindewelle (24) einen hohlen Innenraum hat, der so ausgebildet ist, dass er in Richtung einer Seite gegenüber dem Bremsausgabeabschnitt (21) offen ist, und
die Drückerfeder (26) die Kupplungsmutter (27), die mit der Gewindewelle (24) verschraubt ist, in Richtung der vorderen Kupplung (28) vorspannt, indem sie die Gewindewelle (24) von innen her vorspannt.

3. Bremszylindervorrichtung (2, 3) nach Anspruch 2,
die des Weiteren eine Drückerfederführung (32) umfasst, die als ein wellenartiger Abschnitt ausgebildet ist, der so angeordnet ist, dass er zusammen mit dem Führungsrohr (25) beweglich ist und ins Innere der Drückerfeder (26) eingesetzt ist, die als eine spiralförmige Feder ausgebildet ist, um eine Verformung der Drückerfeder (26) in der Knickrichtung zu begrenzen,
wobei die Drückerfederführung (32) so angeordnet ist, dass ihre Spitze im Inneren der Gewindewelle (24) gleiten kann.

4. Bremszylindervorrichtung (2, 3) nach einem der Ansprüche 1 bis 3,
wobei die vordere Kupplung (28) und die hintere Kupplung (29) als separate unitäre Elemente ausgebildet sind und jeweils an dem Führungsrohr (25) befestigt sind.

5. Bremszylindervorrichtung (2, 3) nach Anspruch 4,
wobei mindestens eine der vorderen Kupplung (28) und der hinteren Kupplung (29) mit einem Innenumfang des Führungsrohres (25) verschraubt ist.

6. Bremszylindervorrichtung (2, 3) nach einem der Ansprüche 1 bis 5,
die des Weiteren eine Einstellhülse (33) umfasst, die als ein röhrenförmiges Element ausgebildet ist, das um die Gewindewelle (24) herum angeordnet ist und Flexibilität besitzt, und durch ein zweites Ende der Einstellfeder (31), deren erstes Ende mit dem Stopper (30) in Kontakt steht oder verbunden ist, in Richtung der Brems-Gegenrichtung vorgespannt wird,
wobei die Kupplungsmutter (27) und die Einstellhülse (33) durch Eingriffnahme eines Eingriffnahmeabschnitts (33a), der an der Einstellhülse (33) ausgebildet ist, mit einem in Eingriff genommenen Abschnitt (27c), der an der Kupplungsmutter (27) ausgebildet ist, integral ausgestaltet sind.

7. Bremszylindervorrichtung (2, 3) nach Anspruch 6, wobei
der Eingriffnahmeabschnitt (33a) der Einstellhülse (33) den in Eingriff genommenen Abschnitt (27c), der an einem Innenumfang der Kupplungsmutter (27) ausgebildet ist, von der Innenseite her in Eingriff nimmt, und
ein Spielraum, der zwischen einem Innenumfang der Einstellhülse (33) und den Höhen der Gewindegänge der Gewindewelle (24) gebildet wird, eine kleinere Abmessung in der radialen Richtung der Einstellhülse (33) hat als eine Abmessung, in der radialen Richtung der Einstellhülse (33), der Tiefen des Eingriffnahmeabschnitts (33a) und des in Eingriff genommenen Abschnitts (27c), die zusammengefügt sind.

8. Bremszylindervorrichtung (2, 3) nach Anspruch 7, wobei die Einstellfeder (31) so angeordnet ist, dass sie, an ihrem zweiten Ende, eine Federaufnahme vorspannt, die an der Einstellhülse (33) angebracht ist, und
die Federaufnahme so angeordnet ist, dass ein Spielraum, der zwischen dem Außenumfang der Federaufnahme und dem Innenumfang des Führungsrohres (25) gebildet wird, eine Abmessung in der radialen Richtung des Führungsrohres (25) hat, die im Wesentlichen null ist, oder so angeordnet ist, dass der Außenumfang der Federaufnahme und der Innenumfang des Führungsrohres (25) in Gleitkontakt stehen.

9. Bremszylindervorrichtung (2, 3) nach Anspruch 8, wobei die Federaufnahme ein Lager (40) enthält.

10. Bremszylindervorrichtung (2, 3) nach einem der Ansprüche 1 bis 9, die des Weiteren einen Federstopper (34) umfasst, der den Betrag der Verschiebung der Einstellfeder (31) aufgrund elastischer Verformung, die durch eine relative Verschiebung eines zweiten Endes der Einstellfeder (31) mit Bezug auf ihr erstes Ende, das mit dem Stopper (30) in Kontakt steht oder verbunden ist, verursacht wird, auf maximal einen zuvor festgelegten Betrag begrenzt.

11. Bremszylindervorrichtung (2, 3) nach einem der Ansprüche 1 bis 10, wobei Zähne, welche die vordere Kupplung (28) mit der Kupplungsmutter (27) in Eingriff nehmen können, an einer Fläche der vordere Kupplung (28), die der Kupplungsmutter (27) zugewandt ist, und/oder einer Fläche der Kupplungsmutter (27), die der vorderen Kupplung (28) zugewandt ist, ausgebildet sind.

12. Bremszylindervorrichtung (2, 3) nach einem der Ansprüche 1 bis 11, wobei
die Gewindewelle (24) an einer Spitze mit einem Betriebs-Eingriffnahmeabschnitt versehen ist, der ein Betriebswerkzeug ein Eingriff nehmen kann, und so angeordnet ist, dass die Spitze durch den Bremsausgabeabschnitt (21) hindurch führt, und nach außen weist, und
des Weiteren ein Mutternelement (38) vorhanden ist, um einen Außenumfang der Spitze der Gewindewelle (24) in Schraubeingriff zu nehmen und die Gewindewelle (24) mit dem Bremsausgabeabschnitt (21) in Eingriff zu bringen.

13. Scheibenbremsvorrichtung (1), die die Bremszylindervorrichtung (2, 3) nach einem der Ansprüche 1 bis 12 sowie einen Bremssattelkörper (11) umfasst, der mit der Bremszylindervorrichtung (2, 3) versehen ist und so angebracht ist, dass er relativ zu einem Fahrzeug in der Richtung einer Achse verschoben werden kann,
wobei der Betrieb der Bremszylindervorrichtung (2, 3) bewirkt, dass eine Scheibe auf der Achsenseite durch ein Paar Bremsklötze, die an dem Bremssattelkörper (11) angebracht sind, in die Zange genommen wird, wodurch eine Bremskraft generiert wird.

## Revendications

1. Dispositif de cylindre de frein (2, 3) comprenant :
un corps de cylindre (20) ayant un intérieur creux;
un piston (22, 50) qui définit une chambre de pression (37) à l'intérieur du corps de cylindre (20) et auquel une force de sollicitation générée par un ressort de piston (23) est transmise, le piston (22, 50) se déplaçant par rapport au corps de cylindre (20) contre la force de sollicitation du ressort de piston (23) par la fourniture d'un fluide sous pression à la chambre de pression (37);
une partie de sortie de frein (21) qui est prévue pour pouvoir être déplacée avec le piston (20) ou pour pouvoir être déplacée par l'intermédiaire d'un mécanisme d'amplification de force (51) pour amplifier une force générée dans le piston (50) en tant que résultat du mouvement du piston (50), la partie de sortie de frein (21) étant mobile dans une direction de freinage dans laquelle elle fait saillie par rapport au corps de cylindre (20), et dans une direction anti-freinage dans laquelle elle se rapproche du corps de cylindre (20);
une tige filetée (24) qui est reliée à la partie de sortie de frein (21) et a un filetage (24a) formé sur une circonférence extérieure de celle-ci,
un tube de guidage (25) qui est fixé au piston (22) ou au mécanisme d'amplification de force (50) et dans lequel est reçue la tige filetée (24);
un ressort poussoir (26) disposé de manière à pouvoir solliciter la tige filetée (24) vers la direction de freinage vers le tube de guidage (25) ou le piston (22);
un écrou d'embrayage (27) destiné à venir en prise par vissage avec une extrémité de la tige filetée (24) disposée du côté de la partie de sortie de frein (21) par rapport au corps de cylindre (20);
un embrayage avant (28) disposé de manière à pouvoir venir en contact avec l'écrou d'embrayage (27) sur un côté avant, qui est le côté de la partie de sortie de frein (21) par rapport à l'écrou d'embrayage (27);
un embrayage arrière (29) disposé de manière à pouvoir venir en contact avec l'écrou d'embrayage (27) via un intervalle prédéterminé par rapport à l'embrayage avant (28) sur un côté arrière, qui est un côté opposé au côté de la partie de sortie du frein (21) par rapport à l'écrou d'embrayage (27);
une butée (30) qui est disposée de manière à pouvoir se déplacer par rapport à l'écrou d'embrayage (27) et au tube de guidage (25) dans la direction axiale de la tige filetée (24) et dont la plage de déplacement est limitée par rapport au corps de cylindre (20); et un ressort de réglage (31) qui est en contact avec la butée (30) ou relié à celle-ci au niveau d'une première extrémité de celle-ci, et qui est capable de solliciter l'écrou d'embrayage (27) vers la direction anti-freinage.

2. Dispositif de cylindre de frein (2, 3) selon la revendication 1,
dans lequel la tige filetée (24) a un intérieur creux formé de manière à être ouvert vers un côté opposé à la partie de sortie de frein (21), et
le ressort poussoir (26) sollicite l'écrou d'embrayage (27) en prise par vissage avec la tige filetée (24) vers l'embrayage avant (28) en sollicitant la tige filetée (24) depuis l'intérieur.

3. Dispositif de cylindre de frein (2, 3) selon la revendication 2,
comprenant en outre un guide de ressort poussoir (32) qui est formé comme une partie semblable à un arbre prévue de manière à pouvoir être déplacée avec le tube de guidage (25), et qui est inséré à l'intérieur du ressort poussoir (26) prévu sous forme de ressort hélicoïdal pour limiter la déformation du ressort poussoir (26) dans la direction de flambage,
dans lequel le guide de ressort poussoir (32) est disposé de telle sorte qu'une extrémité de celui-ci puisse coulisser à l'intérieur de la tige filetée (24).

4. Dispositif de cylindre de frein (2, 3) selon l'une quelconque des revendications 1 à 3,
dans lequel l'embrayage avant (28) et l'embrayage arrière (29) sont prévus sous forme d'éléments unitaires séparés, et sont chacun fixés au tube de guidage (25).

5. Dispositif de cylindre de frein (2, 3) selon la revendication 4,
dans lequel au moins l'un de l'embrayage avant (28) et de l'embrayage arrière (29) est fixé à une circonférence intérieure du tube de guidage (25) par couplage fileté.

6. Dispositif de cylindre de frein (2) selon l'une quelconque des revendications 1 à 5,
comprenant en outre un manchon de réglage (33) prévu sous forme d'élément tubulaire disposé autour de la tige filetée (24) et présentant une souplesse, et qui est sollicité vers la direction anti-freinage par une seconde extrémité du ressort de réglage (31) dont la première extrémité est en contact avec ou est reliée à la butée (30),
dans lequel l'écrou d'embrayage (27) et le manchon de réglage (33) sont configurés de manière intégrée par la mise en prise d'une partie de mise en prise (33a) formée sur le manchon de réglage (33) avec une partie mise en prise (27c) formée sur l'écrou d'embrayage (27).

7. Dispositif de cylindre de frein (2, 3) selon la revendication 6,
dans lequel la partie de mise en prise (33a) du manchon de réglage (33) vient en prise depuis l'intérieur avec la partie mise en prise (27c) formée sur une circonférence intérieure de l'écrou d'embrayage (27), et
un jeu formé entre une circonférence intérieure du manchon de réglage (33) et le sommet de la crête du filetage de la tige filetée (24) a une dimension inférieure dans la direction radiale du manchon de réglage (33) à une dimension, dans la direction radiale du manchon de réglage (33), de parties dentée de la partie de mise en prise (33a) et de la partie mise en prise (27c) qui sont assemblées.

8. Dispositif de cylindre de frein (2, 3) selon la revendication 7,
dans lequel le ressort de réglage (31) est disposé de manière à solliciter, au niveau de sa seconde extrémité, un récepteur de ressort fixé au manchon de réglage (33), et
le récepteur de ressort est disposé de telle sorte qu'un jeu formé entre la circonférence extérieure du récepteur de ressort et la circonférence intérieure du tube de guidage (25) ait une dimension dans la direction radiale du tube de guidage (25) qui soit sensiblement nulle, ou est disposé de telle sorte que la circonférence extérieure du récepteur de ressort et la circonférence intérieure du tube de guidage (25) soient en contact glissant.

9. Dispositif de cylindre de frein (2, 3) selon la revendication 8, dans lequel le récepteur de ressort comprend un roulement (40).

10. Dispositif de cylindre de frein (2, 3) selon l'une quelconque des revendications 1 à 9,
comprenant en outre une butée de ressort (34) qui limite, jusqu'à une quantité prédéterminée ou moins, la quantité de déplacement du ressort de réglage (31) en raison d'une déformation élastique provoquée par le déplacement relatif d'une seconde extrémité du ressort de réglage (31) par rapport à sa première extrémité qui est en contact avec la butée (30) ou reliée à celle-ci.

11. Dispositif de cylindre de frein (2, 3) selon l'une quelconque des revendications 1 à 10,
dans lequel des dents capables de mettre en prise avec l'embrayage avant (28) avec l'écrou d'embrayage (27) sont formées sur au moins l'une d'une surface de l'embrayage avant (28) qui fait face à l'écrou d'embrayage (27) et d'une surface de l'écrou d'embrayage (27) qui fait face à l'embrayage avant (28).

12. Dispositif de cylindre de frein (2, 3) selon l'une quelconque des revendications 1 à 11,
dans lequel la tige filetée (24) est munie, au niveau de sa pointe, d'une partie de mise en prise de commande apte à venir en prise avec un outil de commande, et est disposée de sorte que la pointe traverse la partie de sortie de frein (21) et soit tournée vers l'extérieur, et
un élément d'écrou (38) est en outre prévu pour venir en prise par vissage avec une circonférence extérieure de la pointe de la tige filetée (24) et pour mettre en prise la tige filetée (24) avec la partie de sortie de frein (21).

13. Dispositif de frein à disque (1) comprenant : le dispositif de cylindre de frein (2, 3) selon l'une quelconque des revendications 1 à 12; et un corps d'étrier (11) qui est équipé du dispositif de cylindre de frein (2, 3) et est fixé de manière à pouvoir être déplacé par rapport à un véhicule dans la direction d'un essieu,
dans lequel le fonctionnement du dispositif de cylindre de frein (2, 3) amène un disque du côté de l'essieu à être pris en sandwich par une paire de plaquettes de frein fixées au corps d'étrier (11), générant ainsi une force de freinage.
